# EUROPÄISCHE PATENTANMELDUNG

(11) **EP 1 659 490 A1**
(43) Veröffentlichungstag der Anmeldung: **24.05.2006**
(21) Anmeldenummer: 05024173.6
(22) Anmeldetag: 05.11.2005
(51) Int. Cl.: G06F 9/445, G07B 17/00

(54) **Verfahren zum Bereitstellen von Diensten zwischen Datenverarbeitungseinrichtungen**

(30) Priorität: 11.11.2004 DE 102004054648
(71) Anmelder: Francotyp-Postalia GmbH, 16547 Birkenwerder (DE)
(72) Erfinder: Heinrich, Clemens, 12161 Berlin (DE); Koschitzki, Henrik, 12555 Berlin (DE); Wittich, Steffen, 12587 Berlin (DE)
(74) Vertreter: Karlhuber, Mathias

(57) **Zusammenfassung**

Verfahren zum Bereitstellen von Diensten, bei dem eine erste Datenverarbeitungseinrichtung (2) für eine entfernte zweite Datenverarbeitungseinrichtung (3, 6.1, 6.2) einen gemäß einer ersten Dienstkonfiguration durchführbaren ersten Dienst bereit stellt, dadurch gekennzeichnet, dass die erste Dienstkonfiguration (7) modular aus einer Mehrzahl von Komponenten (7.1 bis 7.7, 8.1 bis 8.6, 9.1 bis 9.7, 10.1 bis 10.8) aufgebaut ist, wobei wenigstens eine der Komponenten (7.1 bis 7.7) der ersten Dienstkonfiguration (7) zur Aktualisierung des ersten Dienstes veränderbar ist.

## Beschreibung

Die vorliegende Erfindung betrifft ein Verfahren zum Bereitstellen von Diensten, bei dem eine erste Datenverarbeitungseinrichtung für eine entfernte zweite Datenverarbeitungseinrichtung einen gemäß einer ersten Dienstkonfiguration durchführbaren ersten Dienst bereit stellt. Sie betrifft weiterhin eine Anordnung zur Durchführung von Diensten, welche sich zur Durchführung des erfindungsgemäßen Verfahrens eignet.

Bei einem Dienst im Sinne der vorliegenden Erfindung handelt es sich um einen beliebigen Kommunikationsvorgang zwischen zwei Datenverarbeitungseinrichtungen, beispielsweise einem Datenzentrum und einem damit verbindbaren Endgerät, bei dem Daten zwischen den Datenverarbeitungseinrichtungen ausgetauscht werden.

Ein solcher Dienst kann im Anwendungsbereich von Frankiermaschinen beispielsweise eine Fernwertvorgabe zum Laden von Guthaben von einer Datenzentrale in eine Frankiermaschine sein oder das Auslesen von Nutzungsdaten, wie beispielsweise Registerständen etc., aus der Frankiermaschine in die Datenzentrale.

Weiterhin können solche Dienste zum einen von einem Nutzer unmittelbar zum Betrieb einer Datenverarbeitungseinrichtung genutzt werden, wie beispielsweise die Fernwertvorgabe bei Frankiermaschinen. Zum anderen können sie mittelbar, beispielsweise als Wartungsdienst, zum Erhalt der Datenverarbeitungseinrichtung dienen. Schließlich können sie auf Anforderung Dritter, z. B. ein Berichtsdienst an eine Postbehörde, durchgeführt werden.

Bei der bisherigen Durchführung bzw. Bereitstellung von derartigen Diensten besteht das Problem, dass eine explizite Festlegung des Dienstes nach einer Konvention erfolgt, die zum Zeitpunkt der Entwicklung des ältesten Kommunikationspartners, also der ältesten Datenverarbeitungseinrichtung, gültig war. So erfolgt die Kodierung der Kommunikation in einer zu diesem Zeitpunkt verwendeten Programmiersprache. Deklarationen von Datenfeldern, Datentypen, Nachrichten etc. werden dabei statisch in den Programmquellen vorgenommen und durch eine starre Protokollablaufkodierung zu Diensten gebunden. Es liegt somit eine starre Dienstkonfiguration vor.

Da die Endgeräte, mit denen die Dienste durchgeführt werden, üblicherweise dezentral bei einer Vielzahl von Kunden verteilt sind, ist eine Distribution von Aktualisierungen der Dienste kostspielig. Häufig ist der Einsatz von Service-Technikern vor Ort zum Austausch von EPROM-Modulen in den Endgeräten etc. erforderlich.

So ist beispielsweise aus der US 4,528,644 eine Frankiermaschine bekannt, bei der die Funktionen der Frankiermaschine und damit auch die von ihr durchführbaren Dienste starr durch die Firmware der Frankiermaschine definiert sind. Es ist zwar möglich durch über Konfigurationsnachrichten den zur Verfügung stehenden Funktionssatz einmalig vorzugeben. Eine spätere Veränderung des Funktionssatzes oder eine Aktualisierung ist nicht jedoch über derartige Konfigurationsnachrichten erzielbar.

Aus der US 5,369,401 ist es zwar bekannt, den zur Verfügung stehenden Funktionssatz einer Frankiermaschine nahezu beliebig durch entsprechende Befehle aus einem in der Frankiermaschine gespeicherten Funktionspool zusammenzusetzen. Auch hier besteht jedoch wiederum das Problem, dass keine einfache Aktualisierung oder Modifizierung der einzelnen Funktionen des Funktionspools vorgesehen ist.

Aus der WO 02/13145 A1 ist schließlich bekannt, einzelne optionale Funktionen einer Datenverarbeitungseinrichtung, wie einer Frankiermaschine, durch ein nutzergesteuertes Herunterladen von Softwaremodulen aus einer Datenzentrale oder dergleichen zur Verfügung zu stellen. Hierbei besteht der Nachteil, dass stets ein komplettes Softwaremodul mit allen Definitionen der betreffenden Funktion heruntergeladen werden muss, wodurch sich gegebenenfalls ein erhebliches zu übertragendes Datenvolumen ergibt. Dieses Verfahren eignet sich somit nicht bzw. nur bedingt zur ständigen Aktualisierung von Funktionen. Weiterhin erfolgt das Herunterladen nur auf Anforderung des Nutzers der Datenverarbeitungseinrichtung, sodass es nur für Funktionen erfolgt, die dem Nutzer bekannt bzw. bewusst sind.

Der vorliegenden Erfindung liegt daher die Aufgabe zu Grunde, ein Verfahren bzw. eine Anordnung der eingangs genannten Art zur Verfügung zu stellen, welches bzw. welche die oben genannten Nachteile nicht oder zumindest in geringerem Maße aufweist und insbesondere eine einfache und schnelle Aktualisierung bzw. Modifizierung von Diensten ermöglicht.

Die vorliegende Erfindung löst diese Aufgabe ausgehend von einem Verfahren gemäß dem Oberbegriff des Anspruchs 1 durch die im kennzeichnenden Teil des Anspruchs 1 angegebenen Merkmale. Sie löst diese Aufgabe weiterhin ausgehend von einer Anordnung gemäß dem Oberbegriff des Anspruchs 28 durch die im kennzeichnenden Teil des Anspruchs 28 angegebenen Merkmale.

Der vorliegenden Erfindung liegt die technische Lehre zu Grunde, dass eine einfache und schnelle Aktualisierung bzw. Modifizierung von Diensten möglich ist, wenn die Dienstkonfiguration des betreffenden Dienstes derart modular ausgebildet ist, dass einzelne Komponenten der Dienstkonfiguration ausgetauscht bzw. aktualisiert werden können, um den Dienst auf einen aktuellen Stand zu bringen. Erfindungsgemäß ist hierzu vorgesehen, dass die erste Dienstkonfiguration modular aus einer Mehrzahl von Komponenten aufgebaut ist, wobei wenigstens eine der Komponenten der ersten Dienstkonfiguration zur Aktualisierung des ersten Dienstes veränderbar ist.

Dies hat den Vorteil, dass die Struktur und der Ablauf von Komponenten des Dienstes, wie beispielsweise von Datenfeldern, Nachrichten und Nachrichtensequenzen etc., schnell und flexibel geändert werden können. Es muss insbesondere bei kleineren Änderungen nicht die gesamte Dienstkonfiguration komplett geändert werden, sondern es genügt, die betreffende Komponente zu ändern. Weiterhin kann die Entwicklung von Diensten in Bezug auf Varianten des Dienstes wesentlich beschleunigt werden, da der Umsetzungsprozess ohne Quellenbearbeitung, Programmübersetzungen und -erstellung usw. durchgeführt werden kann.

Ein weiterer besonderer Vorteil der vorliegenden Erfindung liegt darin, dass Änderungen in Protokollen zentral in der ersten Datenverarbeitungseinrichtung, beispielsweise einer Datenzentrale, verwaltet werden können und bei Einwahl einer zweiten Datenverarbeitungseinrichtung, beispielsweise eines Endgeräts, auf diese übertragen werden können. Dies kann gesteuert durch die erste Datenverarbeitungseinrichtung und unabhängig von der tatsächlichen Dienstanforderung der betreffenden zweiten Datenverarbeitungseinrichtung erfolgen. Mit anderen Worten kann die Aktualisierung der ersten Dienstkonfiguration ausgelöst und/oder gesteuert durch die erste Datenverarbeitungseinrichtung erfolgen, ohne dass hierfür eine entsprechende Anforderung durch die zweite Datenverarbeitungseinrichtung vorliegt. Die im Betrieb befindlichen zweiten Datenverarbeitungseinrichtungen können hiermit - alle oder gegebenenfalls nach beliebigen Kriterien gruppiert - einfach auf dem aktuellsten Stand gehalten werden.

Die Kosten für Vor-Ort-Einsätze von Technikern reduzieren sich mit der vorliegenden Erfindung erheblich. Im Übrigen können, wie erwähnt, ohne größeren Verwaltungsaufwand alle in Betrieb befindlichen zweiten Datenverarbeitungseinrichtungen schnell erreicht werden.

Bevorzugt ist vorgesehen, dass die erste Datenverarbeitungseinrichtung in einem Bereitstellungsschritt in einem ersten Teilschritt nach einem durch die erste Datenverarbeitungseinrichtung vorgebbaren Auswahlkriterium den ersten Dienst auswählt, in einem zweiten Teilschritt die aktuell gültige erste Dienstkonfiguration des ersten Dienstes ermittelt und in einem dritten Teilschritt wenigstens eine Komponente der ermittelten aktuell gültigen ersten Dienstkonfiguration bereit stellt.

Hierdurch ist eine durch das vorgebbare Auswahlkriterium beliebig steuerbare Aktualisierung der Dienstkonfigurationen und damit der Dienste möglich. Das Auswahlkriterium kann von beliebiger Seite vorgegeben werden.

Die Bereitstellung kann zu einem beliebigen Zeitpunkt, ausgelöst durch ein beliebig vorgebbares Ereignis erfolgen. So kann beispielsweise vorgesehen sein, dass in bestimmten Zeitintervallen die für eine bestimmte zweite Datenverarbeitungseinrichtung verfügbaren Dienste in ihrer aktuellsten Version bereit gestellt werden. Dies kann geschehen, indem die betreffenden aktuellsten Dienstkonfigurationen bzw. deren zur Aktualisierung erforderlichen Komponenten in einen entsprechenden Dienstspeicher der ersten Datenverarbeitungseinrichtung geladen werden, um den Dienst bereit zu stellen.

Bevorzugt erfolgt die Bereitstellung ausgelöst durch eine Kommunikation mit der betreffenden zweiten Datenverarbeitungseinrichtung, da sich hierdurch der insgesamt in der ersten Datenverarbeitungseinrichtung anfallende Verarbeitungsaufwand auf die tatsächlich durchzuführenden Aufwand hierfür beschränkt. Vorzugsweise erfolgt die Auswahl des ersten Dienstes in dem ersten Teilschritt daher in Reaktion auf die Kommunikation mit der zweiten Datenverarbeitungseinrichtung.

Die Bereitstellung des ersten Dienstes kann sich je nach Gestaltung des Dienstes auf eine Breitstellung der entsprechenden Dienstkonfiguration in der ersten Datenverarbeitungseinrichtung beschränken. Dies kann beispielsweise der Fall sein, wenn der betreffende Dienst so gestaltet ist, dass zu seiner Durchführung nur die erste Datenverarbeitungseinrichtung entsprechend aktualisierte Informationen hinsichtlich der Dienstkonfiguration benötigt.

In Fällen, in denen auch die zweite Datenverarbeitungseinrichtung zur Durchführung des Dienstes aktualisierte Informationen hinsichtlich der Dienstkonfiguration benötigt, ist bevorzugt vorgesehen, dass die wenigstens eine Komponente der ermittelten ersten Dienstkönfiguration in dem dritten Teilschritt zur Übermittlung an die zweite Datenverarbeitungseinrichtung bereit gestellt wird. Bevorzugt übermittelt dann die erste Datenverarbeitungseinrichtung in einem vierten Teilschritt des Bereitstellungsschritts die wenigstens eine Komponente der ermittelten ersten Dienstkonfiguration an die zweite Datenverarbeitungseinrichtung.

Wie erwähnt, kann das Auswahlkriterium von beliebiger Seite vorgegeben werden. So kann zum einen festgelegt sein, dass das Auswahlkriterium durch den bzw. die von der zweiten Datenverarbeitungseinrichtung angeforderten Dienst bzw. Dienste definiert wird. Mit anderen Worten kann hiermit jeweils der aktuell über eine Kommunikationsverbindung angeforderte Dienst auf dem aktuellsten Stand bereit gestellt werden.

Ebenso kann zusätzlich oder alternativ festgelegt sein, dass unabhängig von einer aktuellen Anforderung mehrere für eine bestimmte zweite Datenverarbeitungseinrichtung zur Verfügung stehende Dienste auf dem aktuellsten Stand bereit gestellt werden. Dies können alle für die zweite Datenverarbeitungseinrichtung verfügbaren Dienste sein. Ebenso können dies alle für die zweite Datenverarbeitungseinrichtung verfügbaren Dienste sein, die in einem vorgegebenen Zeitraum eine Veränderung erfahren haben. Bei diesem vorgegebenen Zeitraum kann es sich um ein vorgegebenes Zeitintervall oder aber auch um ein variables Zeitintervall, beispielsweise den Zeitraum seit der letzten Kommunikation mit der betreffenden zweiten Datenverarbeitungseinrichtung, handeln.

Vorzugsweise gibt das Auswahlkriterium den auszuwählenden ersten Dienst daher in Abhängigkeit von einem im Rahmen der Kommunikation mit der zweiten Datenverarbeitungseinrichtung von der zweiten Datenverarbeitungseinrichtung angeforderten Dienst vor. Zusätzlich oder alternativ kann das Auswahlkriterium den auszuwählenden ersten Dienst in Abhängigkeit von einer Datenverarbeitungseinrichtungskennung der zweiten Datenverarbeitungseinrichtung vorgeben.

Bei bevorzugten Varianten des erfindungsgemäßen Verfahrens mit Übermittlung der Dienstkonfigurationskomponente bzw. Dienstkonfigurationskomponenten an die zweite Datenverarbeitungseinrichtung wird überprüft, ob in der zweiten Datenverarbeitungseinrichtung die aktuellste Dienstkonfiguration verfügbar ist. Bevorzugt ist hierzu vorgesehen, dass die erste Datenverarbeitungseinrichtung in dem vierten Teilschritt eine verfügbare erste Dienstkonfigurationsversionsinformation, die der in der zweiten Datenverarbeitungseinrichtung verfügbaren ersten Dienstkonfiguration des ersten Dienstes zugeordnet ist, mit einer aktuellen ersten Dienstkonfigurationsversionsinformation vergleicht, die der aktuell gültigen ersten Dienstkonfiguration des ersten Dienstes zugeordnet ist. Die wenigstens eine Komponente der ermittelten ersten Dienstkonfiguration wird dann an die zweite Datenverarbeitungseinrichtung übermittelt, wenn die verfügbare erste Dienstkonfigurationsversionsinformation von der aktuellen ersten Dienstkonfigurationsversionsinformation abweicht.

Diese Überprüfung kann anhand in der ersten Datenverarbeitungseinrichtung gespeicherter Informationen über die aktuell in einer zweiten Datenverarbeitungseinrichtung verfügbaren Dienste erfolgen. Ebenso kann aber natürlich auch vorgesehen sein, dass die betreffende Datenverarbeitungseinrichtung im Rahmen der Kommunikation zunächst eine entsprechende Information an die erste Datenverarbeitungseinrichtung übermittelt, anhand derer die erste Datenverarbeitungseinrichtung dann die Überprüfung vornimmt. Vorzugsweise wird daher die verfügbare erste Dienstkonfigurationsversionsinformation im Rahmen der Kommunikation mit der zweiten Datenverarbeitungseinrichtung in der ersten Datenverarbeitungseinrichtung empfangen.

Schließlich kann im Übrigen vorgesehen sein, dass das Auswahlkriterium nicht von der ersten Datenverarbeitungseinrichtung vorgegeben wird, sondern von einer externen Stelle, beispielsweise über eine dritte Datenverarbeitungseinrichtung, vorgegeben wird. Auf dem Frankiermaschinensektor kann es sich hierbei beispielsweise um einen Postbeförderer handeln, der das Auswahlkriterium vorgibt.

Bei weitern bevorzugten Varianten des erfindungsgemäßen Verfahrens umfasst der erste Dienst wenigstens eine erste Dienstfunktionskomponente und wenigstens eine erste Dienstkomponente, die durch die erste Dienstkonfiguration definiert sind. Die erste Dienstkomponente ist zumindest teilweise durch eine erste Definitionskomponente der ersten Dienstkonfiguration definiert. Weiterhin ist die erste Dienstkonfiguration derart ausgebildet, dass wenigstens die erste Definitionskomponente der ersten Dienstkonfiguration separat modifizierbar ist, d. h. veränderbar oder gegebenenfalls sogar vollständig austauschbar ist.

Die erste Dienstfunktionskomponente bezeichnet dabei eine Komponente des Dienstes, welche die bzw. eine eigentliche Funktion des Dienstes darstellt. Es kann sich bei ihr um eine Programmkomponente handeln, die einen oder mehrere fachliche Methodenaufrufe bereitstellt. Hierbei kann es sich beispielsweise um die Durchführung von Berechnungen, die Speicherung von Daten oder deren Auslesen handeln. Die erste Dienstfunktionskomponente kann den Austausch mit technischen Ressourcen der betreffenden Datenverarbeitungseinrichtung festlegen bzw. definieren.

Die erste Dienstkomponente bezeichnet eine weitere Komponente neben dieser ersten Dienstfunktionskomponente. Bei ihr kann es sich um eine beliebige Komponente des ersten Dienstes handeln. Sie kann beispielsweise eine Komponente sein, welche den Ablauf des ersten Dienstes und/oder bestimmte Parameter, welche die erste Dienstfunktionskomponente nutzt, definiert.

Bei diesen Varianten ist es unter anderem in einfacher Weise möglich, Dienste nahezu beliebig zu variieren bzw. zu aktualisieren, ohne einen durch die erste Dienstfunktionskomponente vorgegebenen Rahmen zu verlassen. Liefert beispielsweise eine erste Dienstfunktionskomponente eines ersten Dienstes als Funktion bei ihrem Aufruf bzw. ihrer Abarbeitung das Auslesen einer bestimmten Anzahl von Parametern aus der zweiten Datenverarbeitungseinrichtung, so kann durch die Veränderbarkeit der ersten Dienstkomponente in diesem Rahmen eine beliebige Variation des Ergebnisses des ersten Dienstes erfolgen. Über die erste Dienstkomponente kann beispielsweise festgelegt werden, dass alle oder nur ein beliebig definierbarer Teil der von der ersten Dienstfunktionskomponente gelieferten Parameter an die erste Datenverarbeitungseinrichtung übertragen wird. Ebenso kann hierüber festgelegt werden, in welcher Formatierung oder sonstigen Aufbereitung diese Parameter übertragen werden.

Schließlich kann über die Veränderbarkeit der ersten Dienstkomponente natürlich auch auf die Art der Übertragung dieser Parameter ebenso Einfluss genommen werden, wie auf die Art und Weise der Kommunikation zwischen den beiden Datenverarbeitungseinrichtungen selbst.

Bei bevorzugten Varianten des erfindungsgemäßen Verfahrens ist die erste Dienstkomponente zumindest teilweise durch wenigstens ein erstes Datenfeld definiert. Das erste Datenfeld ist dann durch eine erste Datenfeldkonfiguration definiert, die wiederum zumindest teilweise durch die erste Definitionskomponente definiert ist. Mit anderen Worten kann also über die Veränderung der ersten Definitionskomponente auf einzelne den ersten Dienst definierende Datenfelder Einfluss genommen und so der erste Dienst modifiziert bzw. aktualisiert werden.

Das erste Datenfeld besteht dabei vorzugsweise aus generischen Datenelementen, also aus nicht mehr weiter aus noch grundlegenderen Datenelementen ableitbaren Strukturen, oder aus Mengen von generischen oder abgeleiteten Datenelementen, die eine im Anwendungskontext sinnvolle, makroskopische Struktur bilden.

Weiterhin kann die erste Datenfeldkonfiguration einen beliebigen modularen Aufbau haben. Vorzugsweise umfasst die erste Datenfeldkonfiguration als Datenfeldkonfigurationskomponente eine erste Datenfeldkennung, die eine Einzigartigkeit oder eine Gruppenzugehörigkeit kennzeichnet. Zusätzlich oder alternativ umfasst die erste Datenfeldkonfiguration als Datenfeldkonfigurationskomponente eine erste Datenfeldtypinformation, beispielsweise eine Kennzeichnung als Ganzzahlwert, als Gleitkommawert, als Textstring, usw. Zusätzlich oder alternativ umfasst die erste Datenfeldkonfiguration als Datenfeldkonfigurationskomponente eine erste Datenfeldversionsinformation. Zusätzlich oder alternativ umfasst die erste Datenfeldkonfiguration als Datenfeldkonfigurationskomponente eine erste Datenfeldlängeninformation, z. B. hinsichtlich der Anzahl der Zeichen eines Textstrings etc. Zusätzlich oder alternativ umfasst die erste Datenfeldkonfiguration als Datenfeldkonfigurationskomponente eine erste Datenfeldzusammensetzungsinformation, also eine oder mehrere Vorschriften zur Zusammensetzung von anderen Datenelementen, z. B. der Vorschrift, das Datenfeld "Name" besteht aus Textstring "Vorname" und Textstring "Nachname", usw. Zusätzlich oder alternativ umfasst die erste Datenfeldkonfiguration als Datenfeldkonfigurationskomponente eine erste Datenfeldwertebereichsinformation, z. B. als Wertebereich Ganzzahlwerte zwischen 0 und 9. Zusätzlich oder alternativ umfasst die erste Datenfeldkonfiguration als Datenfeldkonfigurationskomponente eine erste Datenfeldverarbeitungsinformation, welche die Behandlung der Datenfelder vor und/oder nach der Versendung beschreiben, wie zum Beispiel eine Komprimierung, Authentisierung, Verschlüsselung oder beliebige andere Verfahren, die auf Datenfelder wirken.

Wenigstens eine Datenfeldkonfigurationskomponente ist dabei dann durch die erste Definitionskomponente definiert, sodass die erste Datenfeldkonfiguration und damit der erste Dienst in nahezu beliebiger Weise modifiziert werden kann.

Bei bevorzugten Varianten des erfindungsgemäßen Verfahrens ist vorgesehen, dass die erste Dienstkomponente zumindest teilweise durch wenigstens eine erste Nachricht definiert ist. Die erste Nachricht ist dabei durch eine erste Nachrichtenkonfiguration definiert, die wiederum zumindest teilweise durch die erste Definitionskomponente definiert ist. Mit anderen Worten kann also über die Veränderung der ersten Definitionskomponente auf einzelne den ersten Dienst definierende Nachrichten Einfluss genommen und so der erste Dienst modifiziert bzw. aktualisiert werden. Der Begriff "Nachrichten" soll dabei im Sinne der vorliegenden Erfindung aus Datenfeldern zusammengesetzte Datenelemente bezeichnen, welche die generische Übertragungseinheit für die Kommunikation bilden.

Vorzugsweise umfasst die erste Nachrichtenkonfiguration als Nachrichtenkonfigurationskomponente eine erste Nachrichtenkennung und/oder eine erste Nachrichtentypinformation und/oder eine erste Nachrichtenversionsinformation und/oder eine erste Nachrichtenlängeninformation. Zusätzlich oder alternativ umfasst die erste Nachrichtenkonfiguration als Nachrichtenkonfigurationskomponente eine erste Nachrichtenverarbeitungsinformation, welche die Behandlung der Nachricht vor und/oder nach der Versendung definiert, wie z. B. die Komprimierung, Authentisierung, Verschlüsselung, Übersetzung, usw.

Wenigstens eine Nachrichtenkonfigurationskomponente ist durch die erste Definitionskomponente definiert, sodass die erste Nachrichtenkonfiguration und damit der erste Dienst in nahezu beliebiger Weise modifiziert werden kann. Weiterhin können die Nachrichtenkonfigurationen ganz oder teilweise auf die Konfigurationseinträge von Datenfeldern zurückgreifen und diese verwenden, sodass eine Nachrichtenkonfiguration gegebenenfalls auch durch eine Modifikation eines solchen Datenfeldes modifiziert werden kann. Bevorzugt umfasst die erste Nachricht daher wenigstens ein erstes Datenfeld.

Bei weiteren bevorzugten Ausgestaltungen des erfindungsgemäßen Verfahrens ist die erste Dienstkomponente zumindest teilweise durch wenigstens ein erstes Protokoll definiert, wobei das erste Protokoll eine Abfolge im Rahmen des ersten Dienstes auszutauschender Nachrichten festlegt. Das erste Protokoll ist dann durch eine erste Protokollkonfiguration definiert, die wiederum zumindest teilweise durch die erste Definitionskomponente definiert ist. Mit anderen Worten kann also über die Veränderung der ersten Definitionskomponente auf einzelne den ersten Dienst definierende Protokolle Einfluss genommen und so der erste Dienst modifiziert bzw. aktualisiert werden. Im Sinne der vorliegenden Erfindung legen Protokollkonfigurationen bevorzugt die Abfolge von Nachrichten in Diensten fest und regeln die Behandlung der Nachrichtenübertragung.

Vorzugsweise umfasst die erste Protokollkonfiguration als Protokollkonfigurationskomponente eine erste Protokollkennung und/oder eine erste Protokollversionsinformation. Zusätzlich oder alternativ umfasst die erste Protokollkonfiguration als Protokollkonfigurationskomponente eine erste Nachrichtenabfolgeinformation, welche die Abfolge der auszutauschenden Nachrichten festlegt.

Zusätzlich oder alternativ umfasst die erste Protokollkonfiguration als Protokollkonfigurationskomponente weiterhin eine erste Protokollsteuerinformation. Hierbei kann es sich um Anweisungen zu Wartezeiten in Nachrichtenabfolgen, zur Steuerung bzw. Anpassung von Zeitüberschreitungen handeln. Weiterhin kann es sich um Anweisungen zu Protokollablaufsteuerungen handeln, welche die Behandlung von Wiederholungen festlegen. Weiterhin kann es sich um Anweisungen zu Protokollablaufsteuerungen handeln, welche die Behandlung von bedingten Protokollpfaden festlegen, die wiederum die Nachrichtenabfolge auf Basis von inneren oder äußeren Bedingungen festlegen. Weiterhin kann es sich um Anweisungen zu Protokollablaufsteuerungen handeln, welche die Verarbeitung von synchronen oder asynchronen Nachrichten regeln. Weiterhin kann es sich um Anweisungen handeln, welche Wiederholungsbedingungen von Nachrichten in Schleifen oder im Falle von Fehlübertragungen vorangehender Nachrichten definieren. Weiterhin kann es sich um Anweisungen handeln, welche Ergebniskennungen definieren, die wiederum festlegen, ob Nachrichten als erfolgreich gewertet werden, und welche weitergehenden Bearbeitungsschritte auszuführen sind.

In diesem Zusammenhang ist es insbesondere möglich, so genannte Transaktionsmarken zu definieren. Diese Transaktionsmarken definieren bestimmte einer oder mehreren Transaktionen zugeordnete Punkte im Ablauf eines Protokolls. So können in einem einfachen Fall so genannte Anfangsmarken und Endmarken festgelegt werden, die den Beginn und das erfolgreiche Ende einer Transaktion definieren. Hiermit kann die Transaktion im Falle eines Abbruchs einer Transaktion und damit eines Protokollablaufs bis zur letzten Anfangsmarke zurückgerollt werden. Mit anderen Worten können die bisherigen Protokollergebnisse dieser Transaktion rückgängig gemacht bzw. verworfen werden.

Neben dem gezielten Zurückrollen der Transaktionen, können Transaktionsmarken auch zu einem Wiederaufsetzen des Protokolls nach Fehlern verwendet werden. Durch Passieren einer zugeordneten Endmarke als bereits erfolgreich ausgeführt erkennbare Protokollschritte müssen nicht wiederholt oder zurückgerollt werden, sodass vorherige Protokollergebnisse hierfür erhalten bleiben und die Gesamtdauer der Dienstdurchführung gering bleibt. Mit diesen Transaktionsmarken ist es somit möglich, den Protokollablauf in Bezug auf Fehler und Abbrüche robuster zu gestalten.

Schließlich umfasst ein solches Protokoll in der Regel auch die oben bereits erwähnte erste Dienstfunktionskomponente, welche die bzw. eine eigentliche fachliche Funktion des betreffenden Dienstes festlegt und die so in das Protokoll des ersten Dienstes eingebettet ist. Vorzugsweise umfasst das erste Protokoll daher als weitere Protokollkomponente wenigstens die erste Dienstfunktionskömponente.

Wenigstens eine Protokollkonfigurationskomponente ist durch die erste Definitionskomponente definiert, sodass die erste Protokollkonfiguration und damit der erste Dienst in nahezu beliebiger Weise modifiziert werden kann. Weiterhin kann die Protokollkonfiguration ganz oder teilweise auf die Konfigurationseinträge von Datenfeldern und/oder Nachrichten zurückgreifen und diese verwenden, sodass eine Protokollkonfiguration gegebenenfalls auch durch eine Modifikation eines solchen Datenfeldes bzw. einer Nachricht modifiziert werden kann.

Bei bevorzugten Varianten des erfindungsgemäßen Verfahrens ist vorgesehen, dass die erste Dienstkonfiguration die Abfolge im Rahmen des ersten Dienstes auszuführender Protokolle festlegt. Dienstkonfigurationen legen dabei bevorzugt die Ablaufumgebung von Protokollen und die Kopplung bzw. Zusammenfassung von Protokollen fest.

Vorzugsweise umfasst die erste Dienstkonfiguration als Dienstkonfigurationskomponente eine erste Dienstkennung und/oder eine erste Dienstversionsinformation. Zusätzlich oder alternativ umfasst die erste Dienstkonfiguration als Dienstkonfigurationskomponente, eine erste Protokollabfolgeinformation der auszuführenden Protokolle, welche die Abfolge zu verkettender Protokolle, die den Dienst bilden festlegt.

Zusätzlich oder alternativ umfasst die erste Dienstkonfiguration als Dienstkonfigurationskomponente eine erste Dienststeuerinformation Hierbei kann es sich um Verbindungsinformationen, wie zum Beispiel die Art der Verbindung (Modem, ISDN, DSL etc.), den Einwahlpunkt bzw. Zieladresse, der zu verwendenden Kommunikationsmittel und Transportprotokolle (TCP, X25 etc.) handeln. Weiterhin kann es sich um Ergebniskennungen der Protokolle und deren Weiterverarbeitung handeln, z. B. um Anweisungen, ob oder wann Dienste oder Protokolle als erfolgreich gelten und welche weiteren Verarbeitungsschritte angeschlossen werden sollen.

Schließlich kann die erste Dienstkonfiguration als Dienstkonfigurationskomponente eine erste Dienstvarianteninformation umfassen. Diese erlaubt die Abbildung von Ländervarianten und sprachabhängigen Informationen wie Hilfetexten, Fehlermeldungen etc.

Wenigstens eine Dienstkonfigurationskomponente ist durch die erste Definitionskomponente definiert, sodass die erste Dienstkonfiguration und damit der erste Dienst in nahezu beliebiger. Weise auch auf diese Weise modifiziert werden kann. Weiterhin kann die Dienstkonfiguration ganz oder teilweise auf die Konfigurationseinträge von Datenfeldern und/oder Nachrichten und/oder Protokollen zurückgreifen und diese verwenden, sodass eine Dienstkonfiguration gegebenenfalls auch durch eine Modifikation eines solchen Datenfeldes, einer Nachricht bzw. eines Protokolls modifiziert werden kann.

Bei bevorzugten Varianten des erfindungsgemäßen Verfahrens wird die erste Dienstkonfiguration und damit der erste Dienst in Abhängigkeit von einer ersten Modifikationsvorgabe verändert. Vorzugsweise wird hierzu wenigstens die erste Definitionskomponente in Abhängigkeit von einer ersten Modifikationsvorgabe modifiziert. Diese Modifikationsvorgabe kann von beliebiger Seite vorgegeben werden. So kann sie beispielsweise durch die erste Datenverarbeitungseinrichtung vorgegeben werden. Ebenso kann sie aber auch extern vorgegeben werden. So kann die Modifikationsvorgabe beispielsweise auch durch eine dritte Datenverarbeitungseinrichtung erfolgen, die bei einer Anwendung im Frankiermaschinensektor beispielsweise von einem Postbeförderer betrieben wird.

Die Kodierung der Konfigurationen des ersten Dienstes bzw. seiner Komponenten kann auf beliebige geeignete Weise erfolgen, welche eine entsprechende Modularität und flexible Veränderbarkeit der Dienste ermöglicht. Bevorzugt erfolgt die Kodierung durch ein semantisch-hierarchisches Kodierformat, vorzugsweise XML oder ein Format ähnlicher Flexibilität.

Bevorzugt ist der erste Dienst daher durch eine erste Dienstkonfiguration und/oder eine erste Datenfeldkonfiguration und/oder eine erste Nachrichtenkonfiguration und/oder eine erste Protokollkonfiguration definiert und wenigstens eine dieser Konfigurationen ist durch ein semantisch-hierarchisches Kodierformat, insbesondere XML, kodiert.

Die Speicherung der Konfigurationskomponenten des ersten Dienstes kann verteilt erfolgen, d. h. in mehreren Dateien. Vorzugsweise erfolgt sie in einer einzigen Datei bzw. einem einzigen Datensatz. Vorzugsweise ist daher vorgesehen, dass der erste Dienst durch eine erste Dienstkonfiguration und/oder eine erste Datenfeldkonfiguration und/oder eine erste Nachrichtenkonfiguration und/oder eine erste Protokollkonfiguration definiert ist und die den ersten Dienst definierenden Konfigurationen in einem ersten Konfigurationsdatensatz zusammengefasst sind.

Die vorliegende Erfindung kann grundsätzlich in beliebigen Bereichen eingesetzt werden, in denen Dienste zwischen einer ersten Datenverarbeitungseinrichtung und einer zweiten Datenverarbeitungseinrichtung durchzuführen sind. Besonders eignet sie sich aber für einen Einsatz im Frankiermaschinensektor. Vorzugsweise ist die erste Datenverarbeitungseinrichtung daher eine Datenzentrale und/oder die zweite Datenverarbeitungseinrichtung eine Frankiermaschine.

Die vorliegende Erfindung betrifft weiterhin ein Verfahren zum Durchführen von Diensten, bei dem in einem Initialisierungsschritt eine Kommunikationsverbindung zwischen einer ersten Datenverarbeitungseinrichtung und einer entfernten zweiten Datenverarbeitungseinrichtung aufgebaut wird, in einem Bereitstellungsschritt wenigstens ein erster Dienst mit einem erfindungsgemäßen Verfahren bereit gestellt wird, und in einem Durchführungsschritt wenigstens der bereit gestellte erste Dienst zwischen der ersten Datenverarbeitungseinrichtung und der zweiten Datenverarbeitungseinrichtung durchgeführt wird. Vorzugsweise wird der erste Dienst dabei in dem Initialisierungsschritt von der zweiten Datenverarbeitungseinrichtung bei der ersten Datenverarbeitungseinrichtung angefordert.

Die vorliegende Erfindung betrifft weiterhin eine Anordnung zum Durchführen von Diensten zwischen einer ersten Datenverarbeitungseinrichtung und einer davon entfernten zweiten Datenverarbeitungseinrichtung, mit einer ersten Datenverarbeitungseinrichtung, die zum Bereitstellen eines gemäß einer ersten Dienstkonfiguration durchführbaren ersten Dienstes für eine zweite Datenverarbeitungseinrichtung ausgebildet ist, und einer davon entfernten zweiten Datenverarbeitungseinrichtung. Erfindungsgemäß ist die erste Dienstkonfiguration modular aus einer Mehrzahl von Komponenten aufgebaut, wobei wenigstens eine der Komponenten der ersten Dienstkonfiguration zur Aktualisierung des ersten Dienstes veränderbar ist.

Mit dieser Anordnung lassen sich die oben beschriebenen Vorteile und Varianten des erfindungsgemäßen Verfahrens in gleichem Maße realisieren, sodass diesbezüglich zur Vermeidung von Wiederholungen auf die obigen Ausführungen Bezug genommen wird.

Die vorliegende Erfindung betrifft schließlich eine Datenverarbeitungseinrichtung, die als erste Datenverarbeitungseinrichtung einer erfindungsgemäßen Anordnung ausgebildet ist sowie eine Datenverarbeitungseinrichtung, die als zweite Datenverarbeitungseinrichtung einer erfindungsgemäßen Anordnung ausgebildet ist. Auch hiermit lassen sich die oben beschriebenen Vorteile und Varianten des erfindungsgemäßen Verfahrens in gleichem Maße realisieren, sodass diesbezüglich zur Vermeidung von Wiederholungen auf die obigen Ausführungen Bezug genommen wird.

Weitere bevorzugte Ausgestaltungen der Erfindung ergeben sich aus den Unteransprüchen bzw. der nachstehenden Beschreibung eines bevorzugten Ausführungsbeispiels, welche auf die beigefügten Zeichnungen Bezug nimmt. Es zeigen
- Figur 1: eine schematische Darstellung einer bevorzugten Ausführungsform der erfindungsgemäßen Anordnung zur Durchführung des erfindungsgemäßen Verfahrens zur Breitstellung und Durchführung von Diensten;
- Figur 2A: eine schematische Darstellung einer ersten Dienstkonfiguration und einer ersten Protokollkonfiguration, die bei der Anordnung aus Figur 1 verwendet wird;
- Figur 2B: eine schematische Darstellung einer ersten Nachrichtenkonfiguration, die bei der Anordnung aus Figur 1 verwendet wird;
- Figur 2C: eine schematische Darstellung einer ersten Datenfeldkonfiguration, die bei der Anordnung aus Figur 1 verwendet wird;
- Figur 3: ein Ablaufdiagramm einer bevorzugten Ausführungsform des erfindungsgemäßen Verfahrens zur Breitstellung und Durchführung von Diensten, das mit der Anordnung aus Figur 1 durchgeführt wird.

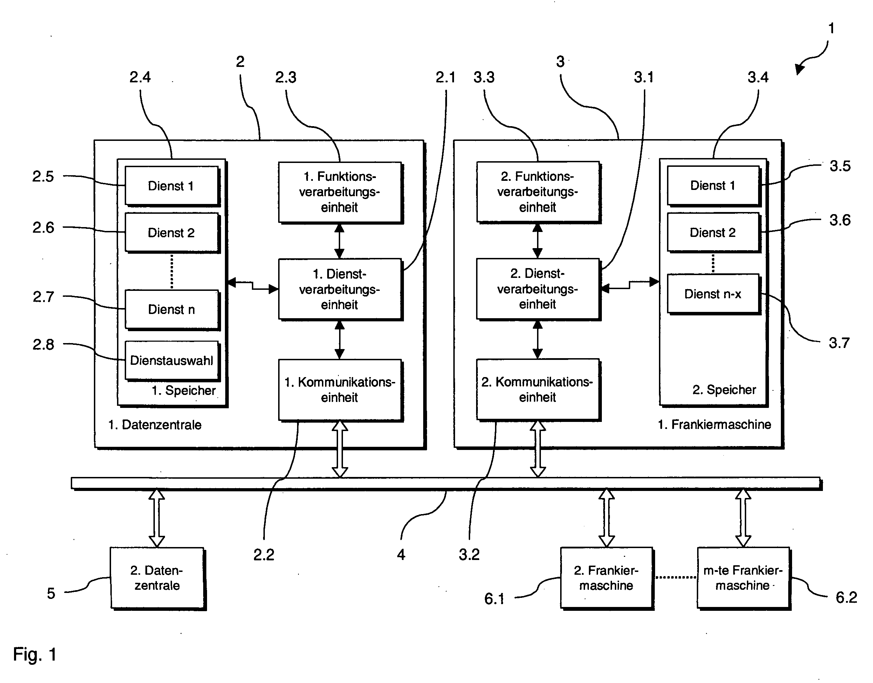

Figur 1 zeigt eine schematische Darstellung einer bevorzugten Ausführungsform der erfindungsgemäßen Anordnung 1 zur Durchführung einer bevorzugten Ausführungsform des erfindungsgemäßen Verfahrens zur Breitstellung und Durchführung von Diensten zwischen einer ersten Datenverarbeitungseinrichtung einer ersten Datenzentrale 2 und einer zweiten Datenverarbeitungseinrichtung in Form einer ersten Frankiermaschine 3.

Die erste Datenzentrale 2 wird vom Hersteller der Frankiermaschine 3 betrieben. Sie stellt der ersten Frankiermaschine 3 bestimmte Dienste zur Verfügung, die im Rahmen einer Kommunikation durchgeführt werden können, die zwischen der ersten Datenzentrale 2 und der ersten Frankiermaschine 3 über ein Kommunikationsnetz 4 stattfinden kann.

Bei einem solchen Dienst im Sinne der vorliegenden Erfindung handelt es sich um einen beliebigen Kommunikationsvorgang zwischen der Datenzentrale 2 und der Frankiermaschine 3, bei dem Daten zwischen der Datenzentrale 2 und der Frankiermaschine 3 ausgetauscht werden. Ein solcher Dienst kann beispielsweise eine Fernwertvorgabe zum Laden von Guthaben von der Datenzentrale 2 in die Frankiermaschine 3 sein oder das Auslesen von Nutzungsdaten, wie beispielsweise Registerständen etc., aus der Frankiermaschine 3 in die Datenzentrale 2. Ebenso kann ein solcher Dienst mittelbar, beispielsweise als Wartungs- oder Konfigurationsdienst, zum Erhalt bzw. zur Modifikation der Funktionen der Frankiermaschine 3 dienen.

Die Anordnung 1 umfasst neben der ersten Datenzentrale 2 und der ersten Frankiermaschine 3 eine zweite Datenzentrale 5 eines Postbeförderers die ebenfalls über das Kommunikationsnetz 4 mit der ersten Datenzentrale 2 verbunden werden kann. Weitere Frankiermaschinen 6.1, 6.2, die in Aufbau und Funktion der Frankiermaschine 3 gleichen, sind ebenfalls über das Kommunikationsnetz 4 mit der ersten Datenzentrale 2 verbindbar.

Die Datenzentrale 2 weist eine erste Dienstverarbeitungseinheit 2.1 und eine damit verbundene erste Kommunikationseinheit 2.2 in Form eines Modems auf. Weiterhin weist die Datenzentrale 2 eine mit der ersten Dienstverarbeitungseinheit 2.1 verbundene erste Funktionsverarbeitungseinheit 2.3 auf. Schließlich weist die Datenzentrale 2 einen mit der ersten Dienstverarbeitungseinheit 2.1 verbundenen ersten Speicher 2.4 auf, in dem in Speicherbereichen 2.5 bis 2.7 eine Reihe von Dienstkonfigurationen gespeichert sind.

Diese Dienstkonfigurationen, deren Aufbau im Folgenden noch näher erläutert wird, stellen dabei die Konfigurationsdaten für sämtliche n Dienste dar, die zwischen der Datenzentrale 2 und den m Frankiermaschinen 2, 6.1, 6.2 durchgeführt werden können. Dabei versteht es sich, dass vorgesehen sein kann, dass je nach Typ und Funktionsumfang der betreffenden Frankiermaschine nicht sämtliche n Dienste zwischen der Datenzentrale 2 und der betreffenden Frankiermaschine durchgeführt werden können. Vielmehr kann für die jeweilige Frankiermaschine auch nur eine, gegebenenfalls jeweils individuelle Teilmenge von n-x Diensten der insgesamt konfigurierten n Dienste vorgesehen sein bzw. zur Verfügung stehen.

Die Frankiermaschine 3 weist eine zweite Dienstverarbeitungseinheit 3.1 und eine damit verbundene zweite Kommunikationseinheit 3.2 in Form eines Modems auf. Weiterhin weist die Frankiermaschine 3 eine mit der zweiten Dienstverarbeitungseinheit 3.1 verbundene zweite Funktionsverarbeitungseinheit 3.3 auf. Schließlich weist die Frankiermaschine 3 eine mit der zweiten Dienstverarbeitungseinheit 3.1 verbundenen zweiten Speicher 3.4 auf, in dem in Speicherbereichen 3.5 bis 3.7 die n-x Dienstkonfigurationen der Dienste gespeichert sind, welche für die Frankiermaschine 3 zur Verfügung stehen.

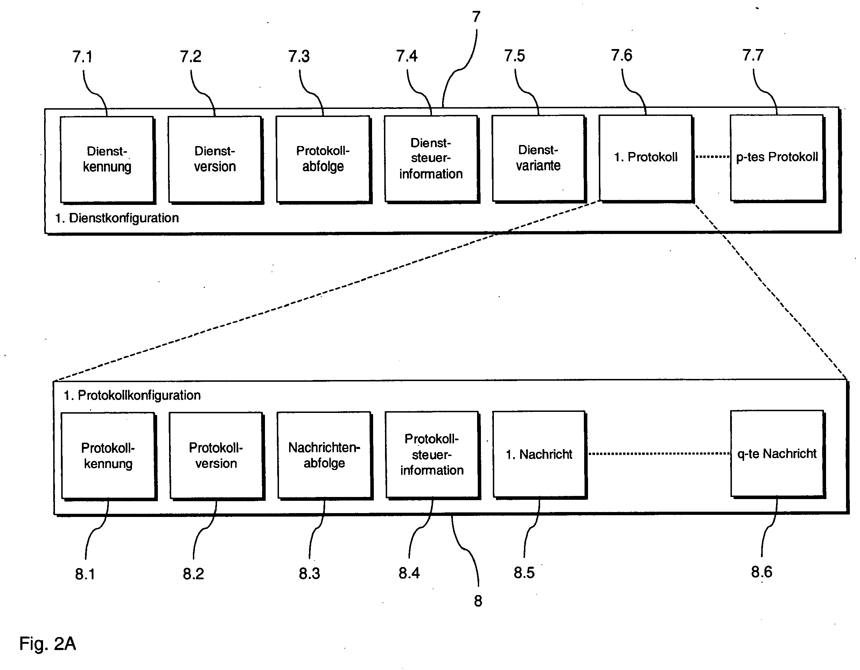

Im Folgenden wird unter Bezugnahme auf die Figuren 2A bis 2C am Beispiel eines ersten Dienstes der Aufbau bzw. die Struktur der den jeweiligen Dienst definierenden Dienstkonfiguration beschrieben.

Wie Figur 2A zu entnehmen ist, umfasst die erste Dienstkonfiguration 7 des ersten Dienstes eine Reihe von Dienstkonfigurationskomponenten 7.1 bis 7.7, welche den ersten Dienst definieren und somit Definitionskomponenten des ersten Dienstes darstellen. So ist als erste Dienstkonfigurationskomponente eine erste Dienstkennung 7.1 vorgesehen, welche den ersten Dienst eindeutig identifiziert. Als zweite Dienstkonfigurationskomponente 7.2 ist eine erste Dienstversionsinformation 7.2 vorgesehen, welche die aktuelle Version des ersten Dienstes identifiziert..

Als dritte Dienstkonfigurationskomponente 7. 3 ist eine erste Protokollabfolgeinformation der im Rahmen des ersten Dienstes auszuführenden Protokolle vorgesehen, welche die Abfolge der zu verkettender Protokolle, die den Dienst bilden, festlegt.

Zusätzlich ist als vierte Dienstkonfigurationskomponente 7.4 eine erste Dienststeuerinformation vorgesehen. Hierbei kann es sich um Verbindungsinformationen, wie zum Beispiel die Art der Verbindung (Modem, ISDN, DSL etc.), den Einwahlpunkt bzw. Zieladresse, der zu verwendenden Kommunikationsmittel und Transportprotokolle (TCP, X25 etc.) handeln. Weiterhin kann es sich um Ergebniskennungen der Protokolle und deren Weiterverarbeitung handeln, z. B. um Anweisungen, ob oder wann der Dienst oder einzelne Protokolle als erfolgreich gelten und welche weiteren Verarbeitungsschritte angeschlossen werden sollen.

Weiterhin ist als fünfte Dienstkonfigurationskomponente 7.5 eine erste Dienstvarianteninformation vorgesehen. Diese erlaubt die Abbildung von Ländervarianten und sprachabhängigen Informationen wie Hilfetexten, Fehlermeldungen etc.

Schließlich umfasst die erste Dienstkonfiguration 7 als weitere Dienstkonfigurationskomponente 7.6 eine erste Protokollkonfiguration eines ersten Protokolls sowie als weitere Dienstkonfigurationskomponenten mehrere weitere Protokollkonfigurationen bis hin zur Protokollkonfiguration 7.7 eines *p*-ten Protokolls des ersten Dienstes. Das jeweilige Protokoll legt dabei jeweils eine Abfolge im Rahmen des ersten Dienstes zwischen der Datenzentrale 2 und der Frankiermaschine 3 auszutauschender Nachrichten fest.

Im vorliegenden Beispiel sind im Rahmen des ersten Dienstes mehrere Protokolle abzuarbeiten. Es versteht sich in diesem Zusammenhang jedoch, dass bei anderen Varianten der Erfindung gegebenenfalls auch nur ein einziges Protokoll abzuarbeiten ist und demgemäß auch nur eine einzige Protokollkonfiguration vorgesehen sein kann.

Wie Figur 2A weiterhin zu entnehmen ist, ist das erste Protokoll durch eine erste Protokollkonfiguration 8 definiert. Diese Protokollkonfiguration 8 weist eine Reihe von Protokollkonfigurationskomponenten 8.1 bis 8.6 auf. Diese Protokollkonfigurationskomponenten 8.1 bis 8.6 definieren das erste Protokoll und damit auch den ersten Dienst. Sie stellen somit ebenfalls Definitionskomponenten des ersten Dienstes dar.

So ist als erste Protokollkonfigurationskomponente 8.1 eine erste Protokollkennung vorgesehen, welche das erste Protokoll eindeutig identifiziert. Als zweite Protokollkonfigurationskomponente 8.2 ist eine erste Protokollversionsinformation 8.2 vorgesehen, welche die aktuelle Version des ersten Protokolls identifiziert.

Weiterhin ist als dritte Protokollkonfigurationskomponente 8.3 eine erste Nachrichtenabfolgeinformation vorgesehen, welche die Abfolge der im Rahmen der Abarbeitung des ersten Protokolls auszutauschenden Nachrichten festlegt. Der Begriff "Nachrichten" soll dabei, wie bereits eingangs erwähnt, aus Datenfeldern zusammengesetzte Datenelemente bezeichnen, welche die generische Übertragungseinheit für die Kommunikation bilden.

Weiterhin umfasst die erste Protokollkonfiguration 8 als vierte Protokollkonfigurationskomponente 8.4 eine erste Protokollsteuerinformation. Hierbei kann es sich um Anweisungen zu Wartezeiten in Nachrichtenabfolgen, zur Steuerung bzw. Anpassung von Zeitüberschreitungen handeln. Weiterhin kann es sich um Anweisungen zu Protokollablaufsteuerungen handeln, welche die Behandlung von Wiederholungen festlegen. Weiterhin kann es sich um Anweisungen zu Protokollablaufsteuerungen handeln, welche die Behandlung von bedingten Protokollpfaden festlegen, die wiederum die Nachrichtenabfolge auf Basis von inneren oder äußeren Bedingungen festlegen. Weiterhin kann es sich um Anweisungen zu Protokollablaufsteuerungen handeln, welche die Verarbeitung von synchronen oder asynchronen Nachrichten regeln. Weiterhin kann es sich um Anweisungen handeln, welche Wiederholungsbedingungen von Nachrichten in Schleifen oder im Falle von Fehlübertragungen vorangehender Nachrichten definieren. Weiterhin kann es sich um Anweisungen handeln, welche Ergebniskennungen definieren, die wiederum festlegen, ob Nachrichten als erfolgreich gewertet werden, und welche weitergehenden Bearbeitungsschritte auszuführen sind.

Die vierte Protokollkonfigurationskomponente 8.4 umfasst dabei insbesondere eine Reihe von Transaktionsmarken. Diese Transaktionsmarken definieren bestimmte einer oder mehreren Transaktionen zugeordnete Punkte im Ablauf eines Protokolls. Im vorliegenden Fall handelt es sich um Anfangsmarken und Endmarken, die jeweils den Beginn bzw. das erfolgreiche Ende einer Transaktion definieren. Hiermit kann die Transaktion im Falle eines Abbruchs einer Transaktion und damit eines Protokollablaufs bis zur letzten Anfangsmarke zurückgerollt werden. Neben dem gezielten Zurückrollen der Transaktionen, erlauben diese Transaktionsmarken auch ein Wiederaufsetzen des Protokolls nach Fehlern. Durch Passieren einer zugeordneten Endmarke als bereits erfolgreich ausgeführt erkennbare Protokollschritte müssen im Fall eines Fehlers nicht wiederholt oder zurückgerollt werden, sodass vorherige Protokollergebnisse hierfür erhalten bleiben und die Gesamtdauer der Dienstdurchführung gering bleibt.

Schließlich umfasst die erste Protokollkonfiguration 8 als weitere Protokollkonfigurationskomponente 8.5 eine erste Nachrichtenkonfiguration einer ersten Nachricht sowie als weitere Protokollkonfigurationskomponenten mehrere weitere Nachrichtenkonfigurationen bis hin zur Nachrichtenkonfiguration 8.6 einer *q*-ten Nachricht des ersten Protokolls.

Die erste Nachricht stellt einen Aufruf einer bestimmten Dienstfunktion dar, welche, wie im Folgenden noch näher erläutert wird, die bzw. eine eigentliche fachliche Funktion des betreffenden ersten Dienstes festlegt und die auf diese Weise in das Protokoll des ersten Dienstes eingebettet ist. Die erste Nachricht definiert somit eine erste Dienstfunktionskomponente des ersten Dienstes. Die übrigen Nachrichten der ersten Protokollkonfiguration 8 stellen entweder weitere Aufrufe bestimmter Dienstfunktionen oder rein dienstbezogene Nachrichten dar.

Im vorliegenden Beispiel sind im Rahmen des ersten Protokolls mehrere Nachrichten auszutauschen. Es versteht sich in diesem Zusammenhang jedoch, dass bei anderen Varianten der Erfindung gegebenenfalls auch nur eine einzige Nachrichten auszutauschen sein kann und demgemäß auch nur eine einzige Nachrichtenkonfiguration vorgesehen sein kann.

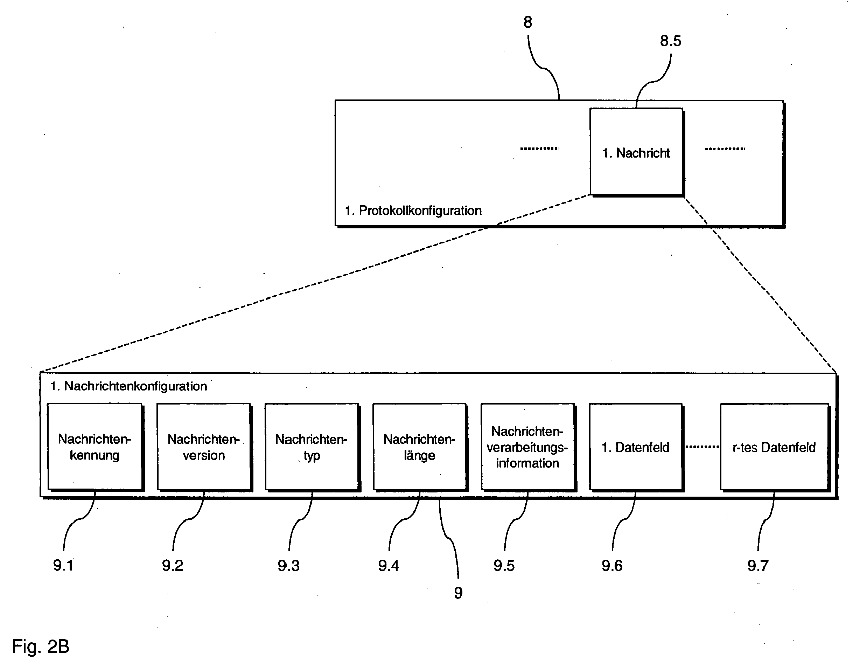

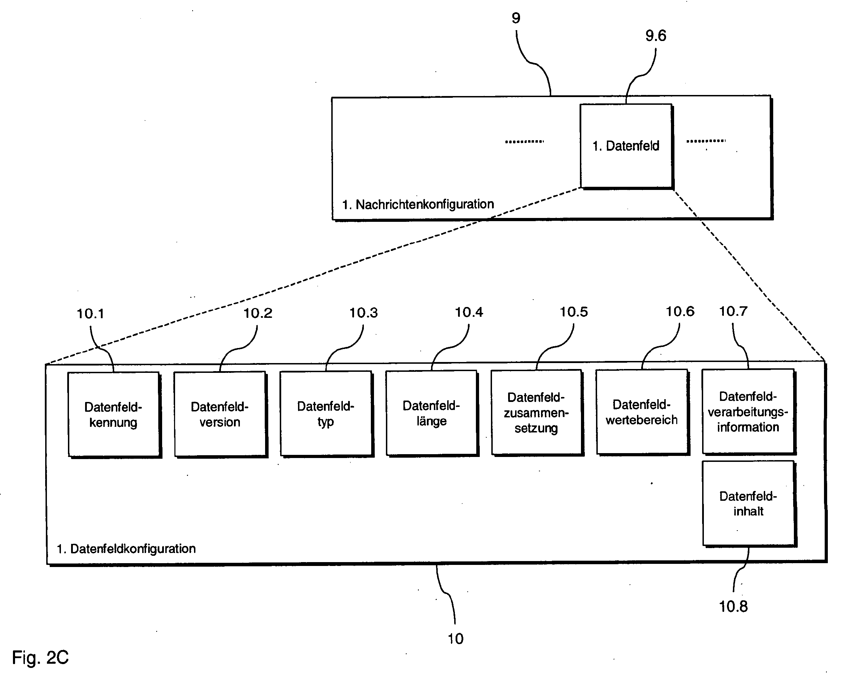

Wie Figur 2B zu entnehmen ist, ist die erste Nachricht durch eine erste Nachrichtenkonfiguration 9 definiert. Diese Nachrichtenkonfiguration 9 weist eine Reihe von Nachrichtenkonfigurationskomponenten 9.1 bis 9.7 auf. Diese Nachrichtenkonfigurationskomponenten 9.1 bis 9.7 definieren die erste Nachricht und somit über das erste Protokoll auch den ersten Dienst. Sie stellen somit ebenfalls Definitionskomponenten des ersten Dienstes dar.

Als erste Nachrichtenkonfigurationskomponente 9.1 ist eine erste Nachrichtenkennung vorgesehen, welche die erste Nachricht eindeutig identifiziert. Als zweite Nachrichtenkonfigurationskomponente 9.2 ist eine erste Nachrichtenversionsinformation 9.2 vorgesehen, welche die aktuelle Version der ersten Nachricht identifiziert.

Weiterhin ist als dritte Nachrichtenkonfigurationskomponente 9.3 eine erste Nachrichtentypinformation sowie als vierte Nachrichtenkonfigurationskomponente 9.4 eine erste Nachrichtenlängeninformation vorgesehen, welche den Nachrichtentyp bzw. die Länge der Nachricht definieren.

Weiterhin ist als fünfte Nachrichtenkonfigurationskomponente 9.5 eine erste Nachrichtenverarbeitungsinformation, welche die Behandlung der Nachricht vor und/oder nach der Versendung definiert, wie z. B. die Komprimierung, Authentisierung, Verschlüsselung, Übersetzung der Nachricht usw.

Schließlich umfasst die erste Nachrichtenkonfiguration 9 als weitere Nachrichtenkonfigurationskomponente 9.6 eine erste Datenfeldkonfiguration eines ersten Datenfelds der ersten Nachricht sowie als weitere Nachrichtenkonfigurationskomponenten mehrere weitere Datenfeldkonfigurationen bis hin zur Datenfeldkonfiguration 9.7 eines *r*-ten Datenfelds der ersten Nachricht.

Im vorliegenden Beispiel umfasst die erste Nachricht mehrere Datenfelder. Es versteht sich in diesem Zusammenhang jedoch, dass bei anderen Varianten der Erfindung gegebenenfalls auch nur ein einziges Datenfeld und demgemäß auch nur eine einzige Datenfeldkonfiguration vorgesehen sein kann.

Die Datenfelder bestehen aus generischen Datenelementen, also aus nicht mehr weiter aus noch grundlegenderen Datenelementen ableitbaren Strukturen, oder aus Mengen von generischen oder abgeleiteten Datenelementen, die eine im Anwendungskontext sinnvolle, makroskopische Struktur bilden.

Wie Figur 2C zu entnehmen ist, ist das erste Datenfeld durch eine erste Datenfeldkonfiguration 10 definiert. Diese Datenfeldkonfiguration 10 weist eine Reihe von Datenfeldkonfigurationskomponenten 10.1 bis 10.9 auf. Diese Datenfeldkonfigurationskomponenten 10.1 bis 10.9 definieren das erste Datenfeld und somit über die erste Nachricht und das erste Protokoll auch den ersten Dienst. Sie stellen somit ebenfalls Definitionskomponenten des ersten Dienstes dar.

Als erste Datenfeldkonfigurationskomponente 10.1 ist eine erste Datenfeldkennung vorgesehen, die eine Einzigartigkeit oder eine Gruppenzugehörigkeit des Datenfelds kennzeichnet. Als zweite Datenfeldkonfigurationskomponente 10.2 ist eine erste Datenfeldversionsinformation 9.2 vorgesehen, welche die aktuelle Version der ersten Nachricht identifiziert. Als dritte Datenfeldkonfigurationskomponente 10.3 ist eine erste Datenfeldtypinformation vorgesehen, beispielsweise eine Kennzeichnung als Ganzzahlwert, als Gleitkommawert, als Textstring, usw.

Als vierte Datenfeldkonfigurationskomponente 10.4 ist eine erste Datenfeldlängeninformation, z. B. hinsichtlich der Anzahl der Zeichen eines Textstrings etc, vorgesehen. Als fünfte Datenfeldkonfigurationskomponente 10.5 ist eine erste Datenfeldzusammensetzungsinformation vorgesehen, also eine oder mehrere Vorschriften zur Zusammensetzung von anderen Datenelementen. Als sechste Datenfeldkonfigurationskomponente 10.6 ist eine erste Datenfeldwertebereichsinformation vorgesehen, welche einen Wertebereich des Datenfelds festlegt, also z. B. als Wertebereich Ganzzahlwerte zwischen 0 und 9 oder dergleichen angibt.

Weiterhin ist als siebte Datenfeldkonfigurationskomponente 10.7 eine erste Datenfeldverarbeitungsinformation vorgesehen, welche die Behandlung der Datenfelder vor und/oder nach der Versendung beschreibt, wie zum Beispiel eine Komprimierung, Authentisierung, Verschlüsselung oder beliebige andere Verfahren, die auf Datenfelder wirken.

Schließlich ist als achte Datenfeldkonfigurationskomponente 10.8 ein Datenfeldinhalt vorgesehen, der den eigentlichen Inhalt des ersten Datenfeldes darstellt.

Es versteht sich in diesem Zusammenhang, dass alle oder einzelne Konfigurationen ganz oder teilweise auf die Konfigurationseinträge untergeordneter Konfigurationen zurückgreifen und diese verwenden können, sodass eine übergeordnete Konfiguration gegebenenfalls auch durch eine Modifikation einer solchen untergeordneten Konfiguration modifiziert werden kann. So kann beispielsweise eine Dienstkonfiguration auf Konfigurationseinträge untergeordneter Konfigurationen, wie Protokollkonfigurationen, Nachrichtenkonfigurationen und Datenfeldkonfigurationen in dieser Weise zurückgreifen. Eine Protokollkonfigurationen kann auf Konfigurationseinträge untergeordneter Konfigurationen, wie Nachrichtenkonfigurationen und Datenfeldkonfigurationen zurückgreifen. Eine Nachrichtenkonfigurationen kann schließlich auf Konfigurationseinträge untergeordneter Datenfeldkonfigurationen zurückgreifen.

Sämtliche Konfigurationen, die zur Definition des ersten Dienstes verwendet werden, also die Dienstkonfiguration, die Protokollkonfigurationen, die Nachrichtenkonfigurationen und die Datenfeldkonfigurationen sind in dem sematisch-hierarchischen Format XML kodiert. Dies erlaubt eine beliebige separate Modifikation und Erweiterung der Konfigurationseinträge, d. h. der jeweiligen der Konfigurationskomponenten, die wiederum jeweils Definitionskomponenten des betreffenden Dienstes darstellen. Hierdurch ist es unter anderem auch möglich, lediglich einzelne Definitionskomponenten des betreffenden Dienstes zu modifizieren und hiermit also auch den Dienst zu modifizieren, ohne alle den Dienst definierenden Konfigurationen komplett ändern zu müssen. Dienste können somit in einfacher Weise modifiziert werden, insbesondere auch erweitert werden.

Ein bevorzugte Art der Kodierung der Nachrichten verwendet als semantisch-hierarchisches Repräsentationsformat XML Dokumente, die durch XML Schemata definiert werden. Auch hier ist somit eine beliebige Modifikation bzw. Erweiterung der Nachrichten möglich.

Es versteht sich in diesem Zusammenhang, dass bei anderen Varianten der Erfindung auch vorgesehen sein kann, dass die Definitionskomponenten aller oder einzelner Dienste in entsprechender Weise durch ein anderes geeignetes semantisch-hierarchisches Format als XML kodiert sind. Ebenso kann vorgesehen sein, dass nur ein Teil der Definitionskomponenten aller oder einzelner Dienste in entsprechender Weise durch XML oder ein anderes derartiges semantisch-hierarchisches Format kodiert sind.

Sämtliche Konfigurationen, die zur Definition des ersten Dienstes verwendet werden, also die Dienstkonfiguration, die Protokollkonfigurationen, die Nachrichtenkonfigurationen und die Datenfeldkonfigurationen sind in einem einzigen ersten Dienstdatensatz zusammengefasst. Mit anderen Worten sind alle relevanten Informationen, die den ersten Dienst, dessen Protokolle, Nachrichten und Datenfelder beschreiben, in einem ersten Dienstdatensatz zusammengefasst. Dieser erste Dienstdatensatz ist in einem zugeordneten Speicherbereich 2.5 des ersten Speichers 2.4 der Datenzentrale 2 gespeichert.

Die Dienstdatensätze für die *n*-1 weiteren Dienste, welche die Datenzentrale 2 zur Verfügung stellt, sind in den weiteren Speicherbereichen 2.6 bis 2.7 des ersten Speichers 2.4 der Datenzentrale 2 gespeichert.

Es versteht sich in diesem Zusammenhang, dass bei anderen Varianten der Erfindung auch vorgesehen sein kann, dass die Konfigurationen, die zur Definition des jeweiligen Dienstes verwendet werden, also die Dienstkonfiguration, die Protokollkonfigurationen, die Nachrichtenkonfigurationen und die Datenfeldkonfigurationen verteilt, d. h. einzeln oder zu beliebig gestalteten Gruppen zusammengefasst, in mehreren Datensätzen gespeichert werden. In Bezug auf die Verteilung der Konfiguration des Dienstes auf z. B. ein oder mehrere Dateien, Datenbanken oder EPROM/Flash-Speicher bestehen keine Einschränkungen.

Sämtliche Konfigurationen, die zur Definition des ersten Dienstes verwendet werden, also die Dienstkonfiguration, die Protokollkonfigurationen, die Nachrichtenkonfigurationen und die Datenfeldkonfigurationen, mithin also sämtliche Definitionskomponenten des ersten Dienstes, können nach Maßgabe beliebig vorgebbarer Modifikationskriterien modifiziert werden. Hierbei können Teile des Dienstes oder der ganze Dienst beliebig ausgetauscht oder erweitert werden.

Die Vorgabe der Modifikationskriterien kann durch die erste Datenzentrale 2 erfolgen. Sie kann aber auch von extern, beispielsweise über eine Kommunikation mit der zweiten Datenzentrale 5 erfolgen.

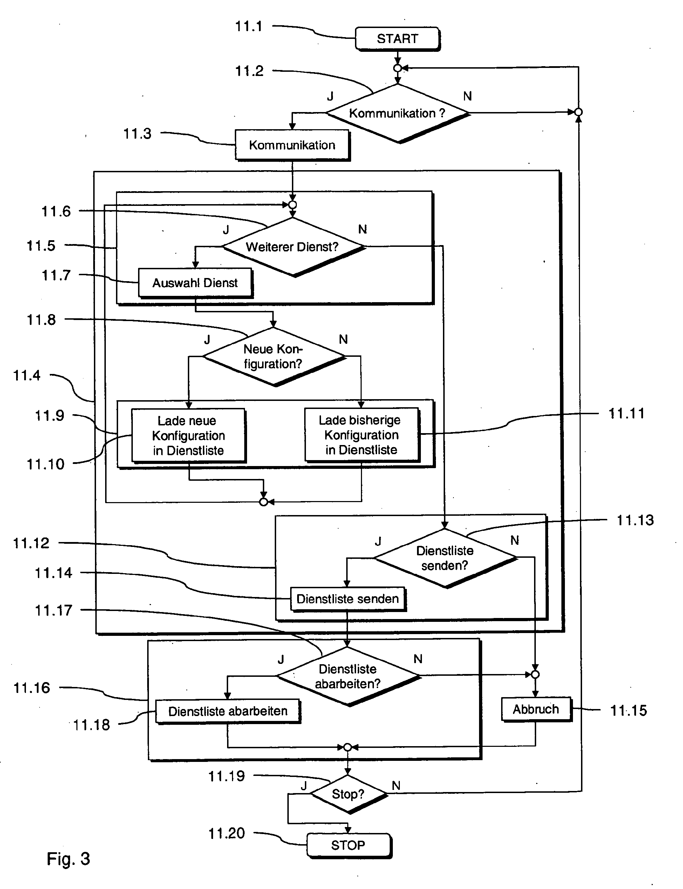

Im Folgenden wird unter Bezugnahme auf die Figuren 1 bis 3C eine bevorzugte Ausführungsform des erfindungsgemäßen Verfahrens zur Breitstellung und Durchführung von Diensten beschrieben, die mit der Anordnung aus Figur 1 durchgeführt wird.

Zunächst wird der Verfahrensablauf in einem Schritt 11.1 gestartet. In einem Schritt 11.2 überprüft erste Dienstverarbeitungseinheit 2.1, ob von einer der Frankiermaschinen 3 bis 6.2 eine aktueller Versuch zum Aufbau einer Kommunikation vorliegt.

Ist dies beispielsweise für die Frankiermaschine 3 der Fall, wird in einem Initialisierungsschritt 11.3 über das erste Modem 2.2, das Kommunikationsnetz 4 und das zweite Modem 3.2 eine Kommunikationsverbindung zwischen der Datenzentrale 2 und der Frankiermaschine 3 aufgebaut.

In einem Bereitstellungsschritt 11.4 stellt die Datenzentrale 2 dann gemäß einer bevorzugten Ausführungsform des erfindungsgemäßen Verfahrens zur Breitstellung von Diensten wenigstens einen ersten Dienst für die Frankiermaschine 3 bereit.

Hierzu überprüft die erste Dienstverarbeitungseinheit 2.1 in einem ersten Teilschritt 11.5 des Bereitstellungsschritts 11.4 zunächst in einem Schritt 11.6, ob ein Dienst zur Breitstellung bzw. Durchführung für die Frankiermaschine 3 vorgesehen ist. Diese Überprüfung erfolgt anhand eines Auswahlkriteriums, das in einem Speicherbereich 2.8 des ersten Speichers 2.4 gespeichert ist. Ergibt die Überprüfung in Schritt 11.6, dass ein erster Dienst auszuwählen ist, wird dieser in dem Schritt 11.7 gemäß dem Auswahlkriterium ausgewählt.

Das Auswahlkriterium kann in beliebiger Weise vorgegeben sein. So kann es beispielsweise lediglich festlegen, dass die Dienste ausgewählt werden, die im Rahmen der Kommunikation mit der Frankiermaschine 3 von der Frankiermaschine 3 angefordert werden. Hierbei kann die Reihenfolge der Auswahl der Dienste der angeforderten Reihenfolge entsprechen. Sie kann hiervon aber auch abweichen.

Ebenso kann vorgesehen sein, dass basierend auf einer Kennung der Frankiermaschine 3 zunächst ein anderer als der von der Frankiermaschine 3 angeforderte Dienst ausgewählt wird. Dies ermöglicht es, unabhängig von der Anforderung der Frankiermaschine 3 Dienste bereits zu stellen und zwischen der Datenzentrale 2 und der Frankiermaschine 3 durchzuführen.

Somit können für die Frankiermaschine 3 beispielsweise automatisch bei jedem Kontakt mit der Datenzentrale 2 bestimmte Aktualisierungsdienste oder Abfragedienste durchgeführt werden, ohne dass diese von der Frankiermaschine 3 angefordert wurden. Dies erleichtert die Verwaltung, Wartung und Aktualisierung der betriebenen Frankiermaschinen 2 bis 6.2 erheblich, ohne das hierfür erheblicher Aufwand betrieben werden müsste. Es genügt lediglich, das Auswahlkriterium für die betreffende Frankiermaschine entsprechend festzulegen, wobei dieses beliebig entsprechend den jeweiligen Anforderungen variiert werden kann. Ein geeignetes Verfahren zu einer solchen Auswahl von durchzuführenden Diensten ist in der deutschen Patentanmeldung Nr. 10 2004 001 622.4 beschrieben, deren Offenbarung hier durch Bezugnahme mit eingeschlossen ist.

In diesem Zusammenhang kann im Übrigen auch vorgesehen sein, dass der von der Frankiermaschine 3 angeforderte Dienst überhaupt nicht ausgewählt wird, wenn in der Datenzentrale 2 eine Information vorliegt, dass der betreffende Dienst für die Frankiermaschine 3 nicht vorgesehen bzw. gesperrt ist. Dabei kann es sogar zu Konstellationen kommen, in denen überhaupt kein Dienst ausgewählt wird, da der angeforderte Dienst durch das Auswahlkriterium gesperrt ist und ansonsten kein weiterer Dienst durch das Auswahlkriterium zur Auswahl bzw. Bereitstellung vorgesehen ist.

In einem zweiten Teilschritt 11.8 des Bereitstellungsschritts 11.4 wird dann die aktuell gültige Dienstkonfiguration des ersten Dienstes ermittelt, indem überprüft wird, ob für den betreffenden ersten Dienst eine neue Konfiguration vorliegt.

Diese Überprüfung kann erfolgen, indem eine in der Datenzentrale 2 gespeicherter, der Frankiermaschine 3 zugeordneter Eintrag abgefragt wird, der den zuletzt festgestellten Aktualitätsstand der in der Frankiermaschine 3 verfügbaren Dienste wiedergibt. Dies kann beispielsweise anhand einer Liste der Dienstkonfigurationsversionsinformationen der in der Frankiermaschine 3 verfügbaren Dienste erfolgen. Diese Dienstkonfigurationsversionsinformationen geben die aktuell in der Frankiermaschine 3 verfügbare Version der Dienste wieder.

Alternativ kann für diese Überprüfung vorgesehen sein, dass im Rahmen der aktuellen Kommunikation von der Frankiermaschine 3 eine Information übermittelt wird, welche den Aktualitätsstand der in der Frankiermaschine 3 verfügbaren Dienste wiedergibt. Diese Information über den Aktualitätsstand der Dienste kann nach oder ohne Aufforderung durch die Datenzentrale 2 von der Frankiermaschine 3 an die Datenzentrale 2 übersandt werden. Eine solche Übermittlung stellt im Übrigen selbst einen Dienst im Sinne der vorliegenden Erfindung dar, welcher gegebenenfalls in der hier beschriebenen Weise durchgeführt werden kann.

Nach der Überprüfung in dem zweiten Teilschritt 11.8 wird in einem dritten Teilschritt 11.9 des Bereitstellungsschritts 11.4 der entsprechende ersten Dienst bereit gestellt. Hierzu wird, wie im Folgenden noch näher ausgeführt wird, wenigstens eine Komponente des aktuellen Dienstes in eine Dienstliste geladen.

Wird in dem zweiten Teilschritt 11.8 beispielsweise festgestellt, dass in der Datenzentrale 2 zwischenzeitlich eine Änderung der ersten Dienstkonfiguration erfolgte, sodass die in der Frankiermaschine 3 verfügbare erste Dienstkonfiguration nicht mehr aktuell ist, wird in einem Schritt 11.10 die aktuelle erste Dienstkonfiguration aus dem Speicherbereich 2.5 in die Dienstliste geladen.

Zu diesem Zweck kann vorgesehen sein, dass der gesamte erste Dienstdatensatz in die Dienstliste geladen wird. Bevorzugt werden aber wegen der Modularität der Dienstkonfigurationen nur die Komponenten des erste Dienstdatensatzes in die Dienstliste geladen, bei denen eine Veränderung stattgefunden hat.

Wird in dem zweiten Teilschritt 11.8 festgestellt, dass in der Datenzentrale 2 zwischenzeitlich keine Änderung der ersten Dienstkonfiguration erfolgte, sodass die in der Frankiermaschine 3 verfügbare erste Dienstkonfiguration weiterhin aktuell ist, wird in einem Schritt 11.10 die bisherige erste Dienstkonfiguration in die Dienstliste geladen.

Zu diesem Zweck kann vorgesehen sein, dass der gesamte bisherige erste Dienstdatensatz in die Dienstliste geladen wird. Bevorzugt wird aber lediglich ein Hinweis in die Dienstliste geladen, der angibt, dass keine Veränderung der ersten Dienstkonfiguration stattgefunden hat.

Anschließend wird zurück zu Schritt 11.6 gesprungen, in dem dann in der oben bereits beschriebenen Weise überprüft wird, ob ein weiterer Dienst zur Bereitstellung und Durchführung vorgesehen ist.

Ist dies nicht der Fall, erfolgt in einem vierten Teilschritt 11.12 des Bereitstellungsschritts 11.4 in einem Schritt 11.13 eine Überprüfung, ob die Dienstliste an die Frankiermaschine 3 übermittelt werden soll. Ist dies der Fall, wird die Dienstliste in einem Schritt 11.14 an die Frankiermaschine 3 übermittelt. Ist dies, beispielsweise aufgrund einer fehlerhaften Kommunikation mit der Frankiermaschine 3, nicht der Fall, wird die Kommunikation in einem Schritt 11.15 abgebrochen.

Die Frankiermaschine 3 aktualisiert ihre in dem zweiten Speicher abgelegten Dienstkonfigurationen dann anhand der übermittelten Dienstliste, sodass sowohl in der Datenzentrale 2 als auch in der Frankiermaschine 3 dann die jeweils aktuellsten Dienstkonfigurationen für die betreffenden Dienste vorliegen. Dabei genügt es wegen der Modularität der Dienstkonfigurationen, nur die mit der Dienstliste übermittelten aktualisierten Komponenten des ersten Dienstdatensatzes zu laden.

Die Teilschritte 11.5, 11.8 und 11.9 des Bereitstellungsschritts erfolgen in vorliegenden Beispiel in Reaktion auf eine Kommunikation mit der Frankiermaschine 3. Es versteht sich jedoch, dass bei anderen Varianten des erfindungsgemäßen Verfahrens auch vorgesehen sein kann, dass die Zusammenstellung der Dienstliste bereits vor einer Kontaktaufnahme mit der betreffenden Frankiermaschine erfolgt. Die Dienstliste kann dann gegebenenfalls lediglich noch um die erforderlichen Komponenten der von der Frankiermaschine angeforderten Dienste erweitert werden, bevor sie an die Frankiermaschine übermittelt wird.

In einem Durchführungsschritt 11.16 wird dann in einem Schritt 11.17 zunächst überprüft, ob die Dienste gemäß der Dienstliste abgearbeitet werden sollen. Ist dies der Fall, werden die aktualisierten Dienste in einem Schritt 11.1 gemäß der Dienstliste abgearbeitet. Ist dies, beispielsweise aufgrund einer fehlerhaften Kommunikation mit der Frankiermaschine 3, nicht der Fall, wird die Kommunikation in dem Schritt 11.15 abgebrochen.

Die Durchführung der Dienste erfolgt dabei hauptsächlich durch die Dienstverarbeitungseinheiten 2.1 und 3.1. Lediglich die Ausführung der eigentlichen fachlichen Funktionen des jeweiligen Dienstes erfolgt durch die jeweilige Funktionsverarbeitungseinheit 2.3 bzw. 3.3. Die betreffende Dienstverarbeitungseinheit 2.1 bzw. 3.1 gibt dabei einen betreffenden Funktionsaufruf durch eine Nachricht des auszuführenden Dienstes and die Funktionsverarbeitungseinheit 2.3 bzw. 3.3 weiter, welche dann diese Funktion ausführt. Bei einer solchen Funktion kann es sich beispielsweise um das Speichern oder Auslesen bestimmter Daten etc. oder die Ausführung bestimmter Programme etc. handeln.

Im Verlauf der Dienste und ihrer Protokolle werden mit anderen Worten Daten mit der Funktionsverarbeitungseinheit 2.3 bzw. 3.3 der Datenzentrale 2 bzw. der Frankiermaschine 3 ausgetauscht. Die Funktionsverarbeitungseinheit 2.3 bzw. 3.3 bildet den kommunikationsunabhängigen Teil der Dienstverarbeitung und stellt so genannte fachliche Schnittstellen bereit, die auf eine parametrierte Anfrage hin, einen Ergebnisdatensatz erzeugen. Fachliche Schnittstellen bearbeiten die Daten, die aus dem Kommunikationskanal stammen und erfüllen die fachlichen Anforderungen.

Die fachlichen Schnittstellen der Funktionsverarbeitungseinheit 2.3 bzw. 3.3 bilden den funktionalen Rahmen, in dem die Dienstkonfiguration variiert werden kann. Die verfügbaren fachlichen Schnittstellen sind, wie oben erläutert, in der jeweiligen Dienstkonfiguration explizit aufgeführt, ihre konkrete Ausprägung muss bei der Definition der Dienste beachtet werden.

Die Ergebnisdatensätze der fachlichen Schnittstellen werden in späteren Protokollschritten in Nachrichten transportiert, oder lokal vorgehalten, um weitere Prozessschritte durchzuführen. Fachliche Schnittstellen können z. B. als Methodenaufrufe von Programmkomponenten ausgeführt sein.

In einem Schritt 11.19 wird schließlich überprüft, ob der Verfahrensablauf beendet werden soll. Ist dies der Fall, endet der Verfahrensablauf in einem Schritt 11.20. Andernfalls wird zu dem Schritt 11.2 zurück gesprungen.

In dem vorstehenden Beispiel wurden die Dienste erst abgearbeitet, nachdem die aktuell durchzuführenden Dienstkonfigurationen in der Datenzentrale 2 und der Frankiermaschine 3 synchronisiert wurden, d. h. beide auf den aktuellsten Stand gebracht wurden. Es versteht sich jedoch, das bei anderen Varianten des erfindungsgemäßen Verfahrens auch vorgesehen sein kann, dass im Zuge jeder bzw. zeitlich oder anderweitig bestimmter Kommunikationen zwischen der Datenzentrale und der Frankiermaschine nicht nur die aktuell durchzuführenden Dienstkonfigurationen, sondern alle für die Frankiermaschine verfügbaren Dienstkonfigurationen synchronisiert werden. Ebenso versteht es sich, dass eine solche Synchronisation der Dienstkonfigurationen auch unterbleiben kann, wenn sie beispielsweise aufgrund der Gestaltung des Dienstes nicht erforderlich ist, sondern der Dienst alleine mit der in der Datenzentrale verfügbaren aktuellen Dienstkonfiguration durchgeführt werden kann.

Bei bevorzugten Varianten der Erfindung kann wie erläutert vorgesehen sein, dass die Dienstverarbeitungseinheit 2.1 bzw. 3.1 zu bestimmten Zeitpunkten, beispielsweise bei einem Systemstart, oder mit Beginn der Kommunikation die Konfigurationen der Dienste auswertet. Die Auswertung kann z. B. die Einstellung von Kommunikationskomponenten oder die Instanzierung von Programmkomponenten enthalten. In der Datenzentrale wird die Dienstverarbeitungseinheit 2.1 nach dieser Initialisierung in der Lage sein, eingehende zu Kommunikationen behandeln und Dienste anzubieten. Bei der Frankiermaschine werden typischerweise die Kommunikation bzw. die Dienstausführung durch den Anwender bestimmt bzw. gestartet.

Bei den zwischen der Datenzentrale 2 und der Frankiermaschine 3 durchzuführenden Diensten kann es sich um beliebige Dienste handeln. Einige Möglichkeiten der Ausprägung solcher Dienste sollen im Folgenden rein exemplarisch erläutert werden

Stellt eine der Dienstkonfigurationen beispielsweise Textinformation für die Darstellung einer Benutzerschnittstelle der Frankiermaschine 3 zur Verfügung, so können diese im Rahmen eines Aktualisierungsdienstes erneuert werden. Verbesserungen, Sprachanpassungen und Korrekturen können somit zentral von der Datenzentrale 2 ausgelöst und gesteuert werden.

Ein weiterer Anwendungsfall besteht in der Übertragung von Betriebsparametern, welche die Frankiermaschine 3 an geänderte oder verbesserte Umstände anpassen. So kann beispielsweise, ein Satz von Kommunikationsparametern im Rahmen eines solchen Dienstes übermittelt und implementiert werden, der die Einstellung einer Kommunikationsschicht (z.B. X25 data link layer) in Bezug auf Timeout-Werte oder dergleichen ändert.

Weiterhin kann eine Frankiermaschine im Rahmen eines Dienstes einen oder mehrere Fernaufrufe von Programmen in der Datenzentrale 2 durchführen. Wird zum Beispiel pro Nachricht von der Frankiermaschine 3 zur Datenzentrale 2 jeweils ein fachlicher Aufruf einer (beliebigen und wechselnden) fachlichen Schnittstelle in der Datenzentrale 2 definiert, und liefert die Antwortnachricht jeweils den Ergebnisdatensatz dieses Fachaufrufs zurück, so kann die Frankiermaschine 3 die Datenzentrale 2 analog zu einer lokalen funktionalen Komponente nutzen. In diesem Szenario kann die Definition des zugehörigen Dienstprotokolls generisch gehalten werden, also verallgemeinert für eine ganze Klasse von Diensten verwendet werden.

Weiterhin versteht es sich im Zusammenhang mit der vorliegenden Erfindung, dass neben der Kodierung der oben erläuterten Nachrichtenkennungen, alle Argumente der fachlichen Methodenaufrufe voll innerhalb der Nachricht definiert sein können, also in sich weitgehend vollständig bezüglich der obengenannten Charakteristika von Nachrichten und Datenfeldern sine können, sodass keine oder wenige äußere Annahmen (außerhalb des Nachrichteninhalts) für die Verarbeitung zu berücksichtigen sind.

Mit der vorliegenden Erfindung können Dienste somit dynamisch auf wechselnde Anforderungen der fachlichen Ausführung anpasst werden. Besteht beispielweise die Notwendigkeit einer Änderung bei Betrieb des Fernwertvorgabeprotokolls einer Frankiermaschine 3 bis 6.2, dergestalt, dass auf Anfrage der zweiten Datenzentrale 5 des Postbeförderers statt eines Parametersatzes A ein geänderter Satz an Parametern an die Datenzentrale 2 übertragen werden soll, z.B. um ein geändertes Berichtsverfahren an die Postbehörde zu unterstützen, so kann die Kodierung des betreffenden Dienstes, also die Programmkomponente, die Nachrichtenaustausch mit dem Dienstgerät vornimmt, ungeändert gelassen werden.

Stattdessen werden die Konfigurationen des Fernwertvorgabedienstes an die neuen Anforderungen angepasst und in der Datenzentrale 2 verfügbar gemacht. Dies können, je nach Ausprägung des Verfahrens, Dienstkonfigurationen der Datenzentrale oder wahlweise auch der Frankiermaschine oder beider Seiten sein.

Bei Einwahl einer Frankiermaschine, die z.B. basierend auf ihrer Modellkennung, von einer Änderung einer Dienstkonfiguration betroffen ist, wird die geänderte Dienstkonfiguration wie erwähnt in die Frankiermaschine geladen. Dies kann im Rahmen eines Aktualisierungsdienstes durchgeführt werden, der z. B. dem durch die Frankiermaschine angeforderten Dienst vorgeschaltet wird. Nach der Aktualisierung der Dienstkonfiguration in der Frankiermaschine kann dann der geänderte Dienst wie beschrieben durchgeführt werden. Weder für den Nutzer der Frankiermaschine 3 noch für den Betreiber der Datenzentrale 2 sind zusätzlich Aufwände notwendig.

Ein weiterer Anwendungsfall des erfindungsgemäßen Verfahrens ist die Aktualisierung von Dienstkonfigurationen in der Frankiermaschine selbst durch einen Aktualisierungsdienst. Dabei wird ein Dienst definiert, dessen Aufgabe darin besteht, sich selbst oder andere Dienstkonfigurationen aus der Datenzentrale 2 in die betreffende Frankiermaschine zu übertragen und zu speichern, so dass nachfolgende Verbindungen mit der Datenzentrale 2 anhand der neuen, aktualisierten Dienstkonfiguration durchgeführt werden.

Die vorliegende Erfindung wurde vorstehend anhand von Beispielen mit einer Datenzentrale als erster Datenverarbeitungseinrichtung und Frankiermaschinen als zweiter Datenverarbeitungseinrichtung beschrieben. Es versteht sich jedoch, dass die vorliegende Erfindung auch im Zusammenhang mit der Durchführung von Diensten zwischen beliebigen anderen Datenverarbeitungseinrichtungen eingesetzt werden kann.

## Patentansprüche

1. Verfahren zum Bereitstellen von Diensten, bei dem eine erste Datenverarbeitungseinrichtung (2) für eine entfernte zweite Datenverarbeitungseinrichtung (3, 6.1, 6.2) einen gemäß einer ersten Dienstkonfiguration durchführbaren ersten Dienst bereit stellt, **dadurch gekennzeichnet, dass** die erste Dienstkonfiguration (7) modular aus einer Mehrzahl von Komponenten (7.1 bis 7.7, 8.1 bis 8.6, 9.1 bis 9.7, 10.1 bis 10.8) aufgebaut ist, wobei wenigstens eine der Komponenten (7.1 bis 7.7) der ersten Dienstkonfiguration (7) zur Aktualisierung des ersten Dienstes veränderbar ist.

2. Verfahren nach Anspruch 1, **dadurch gekennzeichnet, dass** die erste Datenverarbeitungseinrichtung (2) in einem Bereitstellungsschritt (11.4)
- in einem ersten Teilschritt (11.5) nach einem, insbesondere durch die erste Datenverarbeitungseinrichtung (2), vorgebbaren Auswahlkriterium den ersten Dienst auswählt,
- in einem zweiten Teilschritt (11.8) die aktuell gültige erste Dienstkonfiguration (7) des ersten Dienstes ermittelt und
- in einem dritten Teilschritt (11.9) wenigstens eine Komponente (7.1 bis 7.7, 8.1 bis 8.6, 9.1 bis 9.7, 10.1 bis 10.8) der ermittelten aktuell gültigen ersten Dienstkonfiguration (7) bereit stellt.

3. Verfahren nach Anspruch 2, **dadurch gekennzeichnet, dass** die Auswahl des ersten Dienstes in dem ersten Teilschritt (11.5) in Reaktion auf die Kommunikation mit der zweiten Datenverarbeitungseinrichtung (3, 6.1, 6.2) erfolgt.

4. Verfahren nach Anspruch 2 oder 3, **dadurch gekennzeichnet, dass** die wenigstens eine Komponente (7.1 bis 7.7, 8.1 bis 8.6, 9.1 bis 9.7, 10.1 bis 10.8) der ermittelten ersten Dienstkonfiguration (7) in dem dritten Teilschritt (11.9) zur Übermittlung an die zweite Datenverarbeitungseinrichtung (3, 6.1, 6.2) bereit gestellt wird.

5. Verfahren nach einem der Ansprüche 2 bis 4, **dadurch gekennzeichnet, dass** das Auswahlkriterium den auszuwählenden ersten Dienst in Abhängigkeit von
- einem im Rahmen der Kommunikation mit der zweiten Datenverarbeitungseinrichtung (3) von der zweiten Datenverarbeitungseinrichtung (3, 6.1, 6.2) angeforderten Dienst
und/oder
- einer Datenverarbeitungseinrichtungskennung der zweiten Datenverarbeitungseinrichtung (3, 6.1, 6.2)
vorgibt.

6. Verfahren nach einem der Ansprüche 2 bis 5, **dadurch gekennzeichnet, dass** die erste Datenverarbeitungseinrichtung (2) in einem vierten Teilschritt (11.12) des Bereitstellungsschritts (11.4) die wenigstens eine Komponente (7.1 bis 7.7, 8.1 bis 8.6, 9.1 bis 9.7, 10.1 bis 10.8) der ermittelten ersten Dienstkonfiguration (7) an die zweite Datenverarbeitungseinrichtung (3, 6.1, 6.2) übermittelt.

7. Verfahren nach Anspruch 6, **dadurch gekennzeichnet, dass** die erste Datenverarbeitungseinrichtung (2) in dem vierten Teilschritt
- eine verfügbare erste Dienstkonfigurationsversionsinformation (7.2), die der in der zweiten Datenverarbeitungseinrichtung (3, 6.1, 6.2) verfügbaren ersten Dienstkonfiguration (7) des ersten Dienstes zugeordnet ist, mit einer aktuellen ersten Dienstkonfigurationsversionsinformation (7.2) vergleicht, die der aktuell gültigen ersten Dienstkonfiguration (7) des ersten Dienstes zugeordnet ist, und
- die wenigstens eine Komponente (7.1 bis 7.7, 8.1 bis 8.6, 9.1 bis 9.7, 10.1 bis 10.8) der ermittelten ersten Dienstkonfiguration (7) an die zweite Datenverarbeitungseinrichtung (3, 6.1, 6.2) übermittelt, wenn die verfügbare erste Dienstkonfigurationsversionsinformation (7.2) von der aktuellen ersten Dienstkonfigurationsversionsinformation (7.2) abweicht.

8. Verfahren nach Anspruch 7, **dadurch gekennzeichnet, dass** die verfügbare erste Dienstkonfigurationsversionsinformation (7.2) im Rahmen der Kommunikation mit der zweiten Datenverarbeitungseinrichtung (3, 6.1, 6.2) in der ersten Datenverarbeitungseinrichtung (2) empfangen wird.

9. Verfahren nach einem der vorhergehenden Ansprüche, **dadurch gekennzeichnet,**
**dass**
- der erste Dienst wenigstens eine erste Dienstfunktionskomponente und wenigstens eine erste Dienstkomponente umfasst, die durch die erste Dienstkonfiguration (7) definiert sind,
- die erste Dienstkomponente zumindest teilweise durch eine erste Definitionskomponente (7.1 bis 7.7, 8.1 bis 8.4, 8.6, 9.1 bis 9.7, 10.1 bis 10.8) der ersten Dienstkonfiguration (7) definiert ist und
- die erste Dienstkonfiguration (7) derart ausgebildet ist, dass wenigstens die erste Definitionskomponente (7.1 bis 7.7, 8.1 bis 8.4, 8.6, 9.1 bis 9.7, 10.1 bis 10.8) der ersten Dienstkonfiguration (7) separat modifizierbar ist.

10. Verfahren nach Anspruch 9, **dadurch gekennzeichnet, dass**
- die erste Dienstkomponente zumindest teilweise durch wenigstens ein erstes Datenfeld definiert ist,
- das erste Datenfeld durch eine erste Datenfeldkonfiguration (10) definiert ist und
- die erste Datenfeldkonfiguration (10) zumindest teilweise durch die erste Definitionskomponente (10.1 bis 10.8) definiert ist.

11. Verfahren nach Anspruch 10, **dadurch gekennzeichnet, dass** die erste Datenfeldkonfiguration (10) als Datenfeldkonfigurationskomponente
- eine erste Datenfeldkennung (10.1) und/oder
- eine erste Datenfeldversionsinformation (10.2)und/oder
- eine erste Datenfeldtypinformation (10.3) und/oder
- eine erste Datenfeldlängeninformation (10.4) und/oder
- eine erste Datenfeldzusammensetzungsinformation (10.5) und/oder
- eine erste Datenfeldwertebereichsinformation (10.6) und/oder
- eine erste Datenfeldverarbeitungsinformation (10.7) umfasst, wobei wenigstens eine Datenfeldkonfigurationskomponente durch die erste Definitionskomponente definiert ist.

12. Verfahren nach Anspruch 9, **dadurch gekennzeichnet, dass**
- die erste Dienstkomponente zumindest teilweise durch wenigstens eine erste Nachricht definiert ist,
- die erste Nachricht durch eine erste Nachrichtenkonfiguration (9) definiert ist und
- die erste Nachrichtenkonfiguration (9) zumindest teilweise durch die erste Definitionskomponente (9.1 bis 9.7) definiert ist.

13. Verfahren nach Anspruch 12, **dadurch gekennzeichnet, dass** die erste Nachrichtenkonfiguration (9) als Nachrichtenkonfigurationskomponente
- eine erste Nachrichtenkennung (9.1) und/oder
- eine erste Nachrichtentypinformation (9.2) und/oder
- eine erste Nachrichtenversionsinformation (9.3) und/oder
- eine erste Nachrichtenlängeninformation (9.4) und/oder
- eine erste Nachrichtenverarbeitungsinformation (9.5)
umfasst, wobei wenigstens eine Nachrichtenkonfigurationskomponente durch die erste Definitionskomponente definiert ist.

14. Verfahren nach Anspruch 12 oder 13, **dadurch gekennzeichnet, dass** die erste Nachricht wenigstens ein erstes Datenfeld (9.6) umfasst.

15. Verfahren nach Anspruch 9, **dadurch gekennzeichnet, dass**
- die erste Dienstkomponente zumindest teilweise durch wenigstens ein erstes Protokoll definiert ist, wobei das erste Protokoll eine Abfolge im Rahmen des ersten Dienstes auszutauschender Nachrichten festlegt,
- das erste Protokoll durch eine erste Protokollkonfiguration (8) definiert ist und
- die erste Protokollkonfiguration (8) zumindest teilweise durch die erste Definitionskomponente (8.1 bis 8.6) definiert ist.

16. Verfahren nach Anspruch 15, **dadurch gekennzeichnet, dass** die erste Protokollkonfiguration (8) als Protokollkonfigurationskomponente
- eine erste Protokollkennung (8.1) und/oder
- eine erste Protokollversionsinformation (8.2) und/oder
- eine erste Nachrichtenabfolgeinformation (8.3) der auszutauschenden Nachrichten und/oder
- eine erste Protokollsteuerinformation (8.4)
umfasst, wobei wenigstens eine Protokollkonfigurationskomponente durch die erste Definitionskomponente definiert ist.

17. Verfahren nach Anspruch 15 oder 16, **dadurch gekennzeichnet, dass** das erste Protokoll als weitere Protokollkomponente wenigstens die erste Dienstfunktionskomponente (8.5) umfasst.

18. Verfahren nach Anspruch 9, **dadurch gekennzeichnet, dass** die erste Dienstkonfiguration (7) die Abfolge im Rahmen des ersten Dienstes auszuführender Protokolle (7.6, 7.7) festlegt.

19. Verfahren nach Anspruch 18, **dadurch gekennzeichnet, dass** die erste Dienstkonfiguration (7) als Dienstkonfigurationskomponente
- eine erste Dienstkennung (7.1) und/oder
- eine erste Dienstversionsinformation (7.2) und/oder
- eine erste Protokollabfolgeinformation (7.3) der auszuführenden Protokolle und/oder
- eine erste Dienststeuerinformation (7.4) und/oder
- eine erste Dienstvarianteninformation (7.5) umfasst, wobei wenigstens eine Dienstkonfigurationskomponente durch die erste Definitionskomponente definiert ist.

20. Verfahren nach einem der Ansprüche 9 bis 19, **dadurch gekennzeichnet, dass** wenigstens die erste Definitionskomponente (7.1 bis 7.7, 8.1 bis 8.6, 9.1 bis 9.7, 10.1 bis 10.8) in Abhängigkeit von einer ersten Modifikationsvorgabe modifiziert wird.

21. Verfahren nach Anspruch 20, **dadurch gekennzeichnet, dass** die Modifikationsvorgabe durch eine dritte Datenverarbeitungseinrichtung (5) erfolgt.

22. Verfahren nach einem der vorhergehenden Ansprüche, **dadurch gekennzeichnet, dass**
- der erste Dienst durch eine erste Dienstkonfiguration (7) und/oder eine erste Datenfeldkonfiguration (10) und/oder eine erste Nachrichtenkonfiguration (9) und/oder eine erste Protokollkonfiguration (8) definiert ist und
- wenigstens eine dieser Konfigurationen (7, 8, 9, 10) durch ein semantisch-hierarchisches Kodierformat, insbesondere XML, kodiert ist.

23. Verfahren nach einem der vorhergehenden Ansprüche, **dadurch gekennzeichnet, dass**
- der erste Dienst durch eine erste Dienstkonfiguration (7) und/oder eine erste Datenfeldkonfiguration (10) und/oder eine erste Nachrichtenkonfiguration (9) und/oder eine erste Protokollkonfiguration (8) definiert ist und
- die den ersten Dienst definierenden Konfigurationen (7, 8, 9, 10) in einem ersten Konfigurationsdatensatz zusammengefasst sind.

24. Verfahren nach einem der vorhergehenden Ansprüche, **dadurch gekennzeichnet, dass** die erste Datenverarbeitungseinrichtung (2) eine Datenzentrale ist und/oder die zweite Datenverarbeitungseinrichtung (3, 6.1, 6.2) eine Frankiermaschine ist.

25. Verfahren zum Durchführen von Diensten, bei dem
- in einem Initialisierungsschritt (11.3) eine Kommunikationsverbindung zwischen einer ersten Datenverarbeitungseinrichtung (2) und einer entfernten zweiten Datenverarbeitungseinrichtung (3, 6.1, 6.2) aufgebaut wird,
- in einem Bereitstellungsschritt (11.4) wenigstens ein erster Dienst mit einem Verfahren nach einem der vorhergehenden Ansprüche bereit gestellt wird,
- in einem Durchführungsschritt (11.16) wenigstens der bereit gestellte erste Dienst zwischen der ersten Datenverarbeitungseinrichtung (2) und der zweiten Datenverarbeitungseinrichtung (3, 6.1, 6.2) durchgeführt wird.

26. Verfahren nach Anspruch 25, **dadurch gekennzeichnet, dass** der erste Dienst in dem Initialisierungsschritt (11.3) von der zweiten Datenverarbeitungseinrichtung (3) bei der ersten Datenverarbeitungseinrichtung (2) angefordert wird.

27. Anordnung zum Durchführen von Diensten zwischen einer ersten Datenverarbeitungseinrichtung (2) und einer davon entfernten zweiten Datenverarbeitungseinrichtung (3), mit
- einer ersten Datenverarbeitungseinrichtung (2), die zum Bereitstellen eines gemäß einer ersten Dienstkonfiguration (7) durchführbaren ersten Dienstes für eine zweite Datenverarbeitungseinrichtung (3) ausgebildet ist, und
- einer davon entfernten zweiten Datenverarbeitungseinrichtung (3),
**dadurch gekennzeichnet, dass**
- die erste Dienstkonfiguration (7) modular aus einer Mehrzahl von Komponenten (7.1 bis 7.7, 8.1 bis 8.6, 9.1 bis 9.7, 10.1 bis 10.8) aufgebaut ist und
- wenigstens eine der Komponenten (7.1 bis 7.7, 8.1 bis 8.6, 9.1 bis 9.7, 10.1 bis 10.8) der ersten Dienstkonfiguration (7) zur Aktualisierung des ersten Dienstes veränderbar ist.

28. Anordnung zum Durchführen von Diensten nach Anspruch 27, **dadurch gekennzeichnet, dass** die erste Datenverarbeitungseinrichtung (2)
- zur Auswahl des ersten Dienstes nach einem, insbesondere durch die erste Datenverarbeitungseinrichtung (2), vorgebbaren Auswahlkriterium ausgebildet ist,
- zur Ermittlung einer aktuell gültigen erste Dienstkonfiguration (7) des ersten Dienstes ausgebildet ist und
- zum Bereitstellen wenigstens einer Komponente (7.1 bis 7.7, 8.1 bis 8.6, 9.1 bis 9.7, 10.1 bis 10.8) der ermittelten aktuell gültigen ersten Dienstkonfiguration (7) ausgebildet ist.

29. Anordnung nach Anspruch 28, **dadurch gekennzeichnet, dass** die erste Datenverarbeitungseinrichtung (2) zur Auswahl des ersten Dienstes dem in Reaktion auf eine Kommunikation mit der zweiten Datenverarbeitungseinrichtung (3) ausgebildet ist.

30. Anordnung nach Anspruch 28 oder 29, **dadurch gekennzeichnet, dass** die erste Datenverarbeitungseinrichtung (2) zur Übermittlung der wenigstens einen Komponente (7.1 bis 7.7, 8.1 bis 8.6, 9.1 bis 9.7, 10.1 bis 10.8) der ermittelten ersten Dienstkonfiguration (7) an die zweite Datenverarbeitungseinrichtung (3) ausgebildet ist.

31. Anordnung nach einem der Ansprüche 28 bis 30, **dadurch gekennzeichnet, dass** das Auswahlkriterium den auszuwählenden ersten Dienst in Abhängigkeit von
- einem im Rahmen der Kommunikation mit der zweiten Datenverarbeitungseinrichtung (3) von der zweiten Datenverarbeitungseinrichtung (3) angeforderten Dienst
und/oder
- einer Datenverarbeitungseinrichtungskennung der zweiten Datenverarbeitungseinrichtung (3)
vorgibt.

32. Anordnung nach einem der Ansprüche 28 bis 31, **dadurch gekennzeichnet, dass** die erste Datenverarbeitungseinrichtung (2)
- zum Vergleich einer verfügbaren ersten Dienstkonfigurationsversionsinformation (7.2), die der in der zweiten Datenverarbeitungseinrichtung (3) verfügbaren ersten Dienstkonfiguration (7) des ersten Dienstes zugeordnet ist, mit einer aktuellen ersten Dienstkonfigurationsversionsinformation (7.2), die der aktuell gültigen ersten Dienstkonfiguration (7) des ersten Dienstes zugeordnet ist, ausgebildet ist und
- zur Übermittlung der wenigstens einen Komponente (7.1 bis 7.7, 8.1 bis 8.6, 9.1 bis 9.7, 10.1 bis 10.8) der ermittelten ersten Dienstkonfiguration (7) an die zweite Datenverarbeitungseinrichtung (3) für den Fall einer Abweichung der verfügbaren ersten Dienstkonfigurationsversionsinformation (7.2) von der aktuellen ersten Dienstkonfigurationsversionsinformation (7.2) ausgebildet ist.

33. Anordnung nach Anspruch 32, **dadurch gekennzeichnet, dass** die erste Datenverarbeitungseinrichtung (2) zum Empfang der verfügbaren ersten Dienstkonfigurationsversionsinformation (7.2) im Rahmen einer Kommunikation mit der zweiten Datenverarbeitungseinrichtung (3) ausgebildet ist.

34. Anordnung zum Bereitstellen von Diensten nach einem der Ansprüche 27 bis 33, **dadurch gekennzeichnet, dass**
- der erste Dienst wenigstens eine erste Dienstfunktionskomponente und wenigstens eine erste Dienstkomponente umfasst, die durch die erste Dienstkonfiguration (7) definiert sind,
- die erste Dienstkomponente zumindest teilweise durch eine erste Definitionskomponente (7.1 bis 7.7) der ersten Dienstkonfiguration (7) definiert ist, und
- die erste Datenverarbeitungseinrichtung (2) zum separaten Modifizieren wenigstens der ersten Definitionskomponente (7.1 bis 7.7) der ersten Dienstkonfiguration (7) ausgebildet ist.

35. Anordnung nach Anspruch 34, **dadurch gekennzeichnet, dass**
- die erste Dienstkomponente zumindest teilweise durch wenigstens ein erstes Datenfeld (9.6) definiert ist,
- das erste Datenfeld (9.6) durch eine erste Datenfeldkonfiguration (10) definiert ist und
- die erste Datenfeldkonfiguration (10) zumindest teilweise durch die erste Definitionskomponente definiert ist.

36. Anordnung nach Anspruch 35, **dadurch gekennzeichnet, dass** die erste Datenfeldkonfiguration (10) als Datenfeldkonfigurationskomponente
- eine erste Datenfeldkennung (10.1) und/oder
- eine erste Datenfeldversionsinformation (10.2) und/oder
- eine erste Datenfeldtypinformation (10.3) und/oder
- eine erste Datenfeldlängeninformation (10.4) und/oder
- eine erste Datenfeldzusammensetzungsinformation (10.5) und/oder
- eine erste Datenfeldwertebereichsinformation (10.6) und/oder
- eine erste Datenfeldverarbeitungsinformation (10.7) umfasst, wobei wenigstens eine Datenfeldkonfigurationskomponente durch die erste Definitionskomponente definiert ist.

37. Anordnung nach Anspruch 34, **dadurch gekennzeichnet, dass**
- die erste Dienstkomponente zumindest teilweise durch wenigstens eine erste Nachricht (8.5) definiert ist,
- die erste Nachricht (8.5) durch eine erste Nachrichtenkonfiguration (9) definiert ist und
- die erste Nachrichtenkonfiguration (9) zumindest teilweise durch die erste Definitionskomponente (9.1 bis 9.7) definiert ist.

38. Anordnung nach Anspruch 37, **dadurch gekennzeichnet, dass** die erste Nachrichtenkonfiguration (9) als Nachrichtenkonfigurationskomponente
- eine erste Nachrichtenkennung (9.1) und/oder
- eine erste Nachrichtentypinformation (9.2) und/oder
- eine erste Nachrichtenversionsinformation (9.3) und/oder
- eine erste Nachrichtenlängeninformation (9.4) und/oder
- eine erste Nachrichtenverarbeitungsinformation (9.5)
umfasst, wobei wenigstens eine Nachrichtenkonfigurationskomponente durch die erste Definitionskomponente definiert ist.

39. Anordnung nach Anspruch 37 oder 38, **dadurch gekennzeichnet, dass** die erste Nachricht (8.5) wenigstens ein erstes Datenfeld (9.6) umfasst.

40. Anordnung nach Anspruch 34, **dadurch gekennzeichnet, dass**
- die erste Dienstkomponente zumindest teilweise durch wenigstens ein erstes Protokoll (7.6) definiert ist, wobei das erste Protokoll (7.6) eine Abfolge im Rahmen des ersten Dienstes auszutauschender Nachrichten festlegt,
- das erste Protokoll (7.6) durch eine erste Protokollkonfiguration (8) definiert ist und
- die erste Protokollkonfiguration (8) zumindest teilweise durch die erste Definitionskomponente (8.1 bis 8.6) definiert ist.

41. Anordnung nach Anspruch 40, **dadurch gekennzeichnet, dass** die erste Protokollkonfiguration (8) als Protokollkonfigurationskomponente
- eine erste Protokollkennung (8.1) und/oder
- eine erste Protokollversionsinformation (8.2) und/oder
- eine erste Nachrichtenabfolgeinformation (8.3) der auszutauschenden Nachrichten und/oder - eine erste Protokollsteuerinformation (8.4)
umfasst, wobei wenigstens eine Protokollkonfigurationskomponente durch die erste Definitionskomponente definiert ist.

42. Anordnung nach Anspruch 40 oder 41, **dadurch gekennzeichnet, dass** das erste Protokoll (7.6) als weitere Protokollkomponente wenigstens die erste Dienstfunktionskomponente umfasst.

43. Anordnung nach Anspruch 34, **dadurch gekennzeichnet, dass** die erste Dienstkonfiguration (7) die Abfolge im Rahmen des ersten Dienstes auszuführender Protokolle festlegt.

44. Anordnung nach Anspruch 43, **dadurch gekennzeichnet, dass** die erste Dienstkonfiguration (7) als Dienstkonfigurationskomponente
- eine erste Dienstkennung (7.1) und/oder
- eine erste Dienstversionsinformation (7.2) und/oder
- eine erste Protokollabfolgeinformation (7.3) der auszuführenden Protokolle und/oder
- eine erste Dienststeuerinformation (7.4) und/oder
- eine erste Dienstvarianteninformation (7.5)
umfasst, wobei wenigstens eine Dienstkonfigurationskomponente durch die erste Definitionskomponente definiert ist.

45. Anordnung nach einem der Ansprüche 34 bis 44, **dadurch gekennzeichnet, dass** die erste Datenverarbeitungseinrichtung (2) zum Modifizieren wenigstens der ersten Definitionskomponente (7.1 bis 7.7, 8.1 bis 8.6, 9.1 bis 9.7, 10.1 bis 10.8) in Abhängigkeit von einer ersten Modifikationsvorgabe ausgebildet ist.

46. Anordnung nach Anspruch 45, **dadurch gekennzeichnet, dass** eine mit der ersten Datenverarbeitungseinrichtung (2) verbindbare dritte Datenverarbeitungseinrichtung (5) vorgesehen ist, die zur Vorgabe der Modifikationsvorgabe ausgebildet ist.

47. Anordnung nach einem der Ansprüche 27 bis 46, **dadurch gekennzeichnet, dass**
- der erste Dienst durch eine erste Dienstkonfiguration (7) und/oder eine erste Datenfeldkonfiguration (10) und/oder eine erste Nachrichtenkonfiguration (9) und/oder eine erste Protokollkonfiguration (8) definiert ist und
- wenigstens eine dieser Konfigurationen (7, 8, 9, 10) durch ein semantisch-hierarchisches Kodierformat, insbesondere XML, kodiert ist.

48. Anordnung nach einem der Ansprüche 27 bis 47, **dadurch gekennzeichnet, dass**
- der erste Dienst durch eine erste Dienstkonfiguration (7) und/oder eine erste Datenfeldkonfiguration (10) und/oder eine erste Nachrichtenkonfiguration (9) und/oder eine erste Protokollkonfiguration (8) definiert ist und
- die den ersten Dienst definierenden Konfigurationen (7, 8, 9, 10) in einem ersten Konfigurationsdatensatz zusammengefasst sind.

49. Anordnung nach einem der Ansprüche 27 bis 48, **dadurch gekennzeichnet, dass** die zweite Datenverarbeitungseinrichtung (3) zum Empfang der wenigstens einen Komponente (7.1 bis 7.7, 8.1 bis 8.6, 9.1 bis 9.7, 10.1 bis 10.8) der ermittelten aktuell gültigen ersten Dienstkonfiguration (7) und zur Durchführung des ersten Dienstes gemäß der aktuell gültigen ersten Dienstkonfiguration (7) ausgebildet ist.

50. Anordnung nach einem der Ansprüche 27 bis 49, **dadurch gekennzeichnet, dass** die erste Datenverarbeitungseinrichtung (2) eine Datenzentrale ist und/oder die zweite Datenverarbeitungseinrichtung (3, 6.1, 6.2) eine Frankiermaschine ist.

51. Datenverarbeitungseinrichtung, **dadurch gekennzeichnet, dass** sie als erste Datenverarbeitungseinrichtung (2) einer Anordnung (1) nach einem der Ansprüche 27 bis 50 ausgebildet ist.

52. Datenverarbeitungseinrichtung, **dadurch gekennzeichnet, dass** sie als zweite Datenverarbeitungseinrichtung (3, 6.1, 6.2) einer Anordnung (1) nach einem der Ansprüche 27 bis 50 ausgebildet ist.
